(19) Europäisches Patentamt
European Patent Office
Office européen des brevets

(11) **EP 3 543 915 A1**

(12) **EUROPÄISCHE PATENTANMELDUNG**

(43) Veröffentlichungstag:
**25.09.2019 Patentblatt 2019/39**

(51) Int Cl.:
***G06N 3/02*** *(2006.01)*     *G06N 3/063* *(2006.01)*
***G06K 9/00*** *(2006.01)*

(21) Anmeldenummer: **18000276.8**

(22) Anmeldetag: **20.03.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Otte, Ralf, Dr.**
**69469 Weinheim (DE)**

(72) Erfinder:
• Otte, Ralf
 **69469 Weinheim (DE)**
• Otte, Viktor
 **39104 Magdeburg (DE)**

Bemerkungen:
Die Patentansprüche 16-21 gelten als fallen gelassen, da die entsprechenden Anspruchsgebühren nicht entrichtet wurden (R. 45(3) EPÜ).

(54) **VERFAHREN UND EINRICHTUNG ZUR ERZEUGUNG VON ZUSTÄNDEN IN TECHNISCHEN SYSTEMEN**

(57)     Die Erfindung bezieht sich auf ein Verfahren und eine Einrichtung zur passiven Objekterkennung und Objekt-Entfernungsbestimmung, mit dem ohne Zuhilfenahme von aktiven Systemen, wie beispielsweise Lidar-, Radar- oder Sonarsystemen die exakte Entfernung zu Objekten außerhalb des Bildauswertesystems bestimmt werden kann.

Die Erfindung basiert auf den quantenphysikalischen Eigenschaften aller Objekte der Natur, die mittels eines Auswertesystems basierend auf Künstlicher Intelligenz und neuromorpher Computer geeignet analysiert und genutzt werden, um die Entfernung zwischen dem Auswertesystem und den gewünschten Objekten rein passiv und trotzdem hochgenau zu bestimmen.

Desweiteren beschreibt die Erfindung ein Verfahren und eine Einrichtung zur Objektklassifikation, die die Fehler und Risiken von bisherigen neuronalen Systemen, die auch heutige deep learning Systeme inhärent besitzen, vermeidet, indem sie neuromorphe Computer für die Auswertung geeignet nutzt.

Zusammenfassend stellt die Erfindung ein Verfahren und eine Einrichtung für eine neue Art des sog. maschinellen Sehens bereit.

### Entfernungsmessung zu einer homogenen Wand

**Abbildung 11: Messung der Entfernung zu einer homogenen Wand**

**Beschreibung**

**Stand-der-Technik und Aufgabe der Erfindung**

Um Objekte in der Außenwelt zu detektieren, sind verschiedene Verfahren und Einrichtungen zur Objekterkennung bekannt. Dabei unterschiedet man in passive Verfahren, bei denen ein optisches Signal von einem Objekt empfangen wird, zum Beispiel durch eine Videokamera, und aktive Verfahren. Bei den aktiven Verfahren wird von einem Objekterkennungssystem (OS) ein Signal ausgesendet, zum Beispiel ein Ultraschall-, Radar- oder Lasersignal, und aus der Reflexion des Signals an einem Objekt und der Auswertung des reflektierten Signals im Auswertesystem (OS) kann ein Rückschluss über die Art des Objektes und seine Entfernung zum Auswertesystem (OS) gezogen werden.

Die Erfindung bezieht sich auf eine Einrichtung und ein Verfahren zur passiven Objekterkennung mittels empfangener optischer Signale. Hierbei ist es allgemein üblich, die optischen Daten von einem Kamerasystem mit einer oder mehreren Kameras auszuwerten, um aus den ausgewerteten Bilddaten vereinfachte Rückschlüsse über die Objekte in der Umgebung zu ziehen. Dieser Auswertemethode sind deutliche technische Grenzen gesetzt, weshalb heutzutage beispielsweise beim autonomen Fahren aktive Auswertesysteme mit Laser und Radar bevorzugt werden.

Sei beispielsweise ein großes strukturloses Objekt, zum Beispiel eine homogene grüne Wand, gegeben, die unabhängig von der Entfernung stets das gesamte Sehfeld eines optischen Kamerasystems einnimmt, so ist es heutzutage nicht möglich, die Entfernung zu diesem Objekt alleine durch die Auswertung der optischen Bilddaten zu ermitteln. Der Grund liegt einfach darin, dass dem Auswertesystem unabhängig von der Entfernung zur Wand über das Videosystem stets die scheinbar gleichen Bilddaten zur Verfügung gestellt werden. Anhand dieser Bilddaten kann heutzutage kein nachfolgendes technisches Auswertesystem, auch keines aus dem Bereich der sog. Künstlichen Intelligenz, wie dem deep learning, die Entfernung zum äußeren Objekt schätzen.

Aufgabe der Erfindung ist es, eine Einrichtung und ein Verfahren für ein passives Auswertesystem, bestehend aus Kamera- und Auswerteeinheit, anzugeben, welches auch in dem o.g. Fall, das äußere Objekt als äußeres Objekt erkennt und nach vorherigen Lernphase die Entfernung zu einem solchen Objekt ermitteln kann, obwohl die optischen Bilddaten im Auswertesystem scheinbar gleich sind.

Die Aufgabe wird gelöst durch ein technischen Systems, dass dem Prinzip des menschlichen Sehen nachgebildet ist, da der Mensch weder Ultraschall-, Radar-, noch Lasersysteme benötigt, um ein äußeres Objekt in der Außenwelt wahrzunehmen und die Entfernung zu diesem zu schätzen. Dies kann der Mensch insbesondere auch mittels nur eines Auges, so dass es auf eine sog. Parallaxenverschiebung von zwei oder mehreren Kameras bei der Lösung dieser Aufgabe nicht ankommt. In nahezu jedem handelsüblichen Fotoapparat befinden sich heutzutage technische Komponenten, die es ermöglichen, äußere Objekte scharf zu stellen und die Entfernungen zu diesen Objekten zu ermitteln. Allerdings ist für die Lösung der Aufgabe eine Struktur, zum Beispiel eine Kante, des Objektes notwendig.

Ist eine strukturlose Fläche gegeben, die darüber hinaus das gesamte Sehfeld des Kamerasystems einnimmt, so gibt es heutzutage keine Möglichkeit, die Entfernung zu dieser Fläche mit einem passiven, rein optischen Verfahren zu ermitteln.

Teilaufgabe der Erfindung ist es daher, eine technische Einrichtung und ein Verfahren anzugeben, welches die Entfernung zu einem äußeren, das gesamte Sehfeld einnehmenden, vollkommen strukturlosen Objekt mit nur einer optischen Kamera ermitteln kann, ohne aktiv Signale, zum Beispiel Ultraschall-, Radar- oder Lasersignale, aussenden zu müssen.

Des Weiteren gibt es heutzutage keine Möglichkeit, die Entfernung zu einer Punktquelle zu ermitteln, wenn nur diese im Sehfeld auftaucht und keine weiteren Anhaltspunkte gegeben sind. So ist es heutzutage nicht möglich, in einem dunklen Raum, in dem keine Konturen erkennbar sind, mit einem passiven optischen System die Entfernung zu einem einzigen Lichtpunkt in diesem Raum zu ermitteln, der sich in verschiedenen Entfernungen vor einem Auswertesystem befindet. Dies ist auch dann nicht möglich, wenn der Lichtpunkt durch eine Diode oder Laserdiode technisch realisiert ist, auch dann nicht, wenn der Lichtpunkt mit einer dem System unbekannten Taktfrequenz moduliert wird. Dies ist insbesondere dann nicht möglich, wenn sich durch die Entfernungsänderungen des Lichtpunktes, zum Beispiel von 30 cm auf 40 cm Abstand, zum Auswerteobjekt keine Veränderung in der Größenausdehnung des Lichtpunktes ergibt. Für das Auswertesystem nach herkömmlicher Bauart entsteht dann nämlich immer ein scheinbar identisches Abbild, so dass keine Differenzierung und keine Entfernungsschätzung möglich und auch nicht erlernbar ist.

Weitere Teilaufgabe der Erfindung ist es daher, eine technische Einrichtung und ein Verfahren anzugeben, welches die Entfernung zu einem äußeren, vollkommen homogenen Lichtpunkt mit nur einer optischen Kamera ermitteln kann, ohne aktiv Signale, zum Beispiel Ultraschall-, Radar- oder Lasersignale, aussenden zu müssen.

Aus der Auswertung von Bilddaten mit Verfahren der Künstlichen Intelligenz, wie dem deep learning, ist bekannt, dass sich die KI-Auswertesysteme sehr stark irren können, also völlig falsche Bildklassifikationen durchführen. Anstatt beispielsweise einen Tisch zu klassifizieren, kann es passieren, dass das System einen Hund erkennt. Diese völlig falschen Klassifikationen schränken den praktischen Einsatz derartiger Klassifikationssysteme stark ein. Aufgabe der Erfindung ist es daher, eine technische Einrichtung und ein Verfahren anzugeben, welches die Irrtumsquote signifikant senkt und drastische Fehlklassifikationen so gut wie möglich ausschließt.

Die Aufgaben werden im folgenden gelöst, indem das Prinzip des menschlichen Sehens auf eine technische Einrichtung und ein technisches Verfahren umgesetzt wird.

## Erklärung der Abbildungen zur weiteren Erfindungsbeschreibung

Zur Erklärung der Erfindung werden nachfolgende Abbildungen verwendet.

- Abbildung 1: Vereinfachtes Prinzip des menschlichen Sehens: Darstellung eines vereinfachten Prinzips des menschlichen Sehens

- Abbildung 2: Erweitertes Prinzip des menschlichen Sehens: Darstellung eines vervollständigten Prinzips des menschlichen Sehens, was eine dedizierte Außenwahrnehmung erzeugt

- Abbildung 3: Digitales Neuro-System zur Entfernungsmessung (Stand-der-Technik): Stand-der-Technik zur Anwendung eines neuronalen Systems (häufig ein Software-Auswertesystem basierend auf deep-learning Verfahren) auf einem Computer.

- Abbildung 4: Verwendung von Memristoren als Synapsen und Operationsverstärker als Neuronen: Elektronische Verwendung und Verschaltung von Memristoren, die als Synapsen in neuromorphen Computern verwendet werden

- Abbildung 5: Gut geeignete Ausführungsvariante von Memristoren als Synapsen: Weitere elektronische Verwendung und Verschaltung von Memristoren, die als Synapsen in neuromorphen Computern verwendet werden

- Abbildung 6: Neuromorphes (memristives) System zur Entfernungsmessung: Basisabbild zur Entfernungsmessung mit neuromorphen Computern und Memristoren als Synapsen

- Abbildung 7: Entwicklungsmöglichkeiten einer Künstlichen Intelligenz im Vergleich zu mentalen und neuronalen Zuständen des menschlichen Gehirns: Zusammenhang zwischen neuronalen und mentalen Zuständen in einem biologischen und technischen System

- Abbildung 8: Entfernungsmessung zu einer Lichtquelle O1: Entfernungsmessung zu einem Lichtpunkt mit einem neuromorphen System

- Abbildung 9: Schaltkreis mit 8 Memristoren der Firma KNOWM: Schaltkreis aus dem Ausführungsbeispiel

- Abbildung 10: Messung der Entfernung zu einer Quelle bzw. zu einem Punkt: Entfernungsmessung zur einer Wand mit Punkt mit einem neuromorphen System

- Abbildung 11: Messung der Entfernung zu einer homogenen Wand: Entfernungsmessung zu einer strukturlosen Quelle mit einem neuromorphen System

## Physikalische Grundlagen der Erfindung

Da die Theorie zur Lösung der Aufgabe neu ist, soll sie hier in Grundzügen skizziert werden, aber nur insoweit, wie es zur Lösung der Aufgabe notwendig ist. Eine genaue Ausführung der Theorie ist in [Hertig, 2014] und [Otte, 2016] beschrieben.

Wie unter 1 ausgeführt gibt es bis dato kein technisches Verfahren, das dem des menschlichen Sehens ähnlich ist. Dabei geht es nicht um biologische Details, sondern um das Prinzip. Bei allen heutigen Bildverarbeitungssystemen entstehen die Abbilder der Umgebung als Projektionen innerhalb des Bildverarbeitungssystems, zum Beispiel als chemisches Abbild auf einem Fotofilm oder als elektrisches Abbild innerhalb eines Schaltkreises. Aktive Bildverarbeitungssysteme, die beim autonomen Fahren eingesetzt werden, senden zur besseren Umfelderkennung häufig Ultraschall-, Radar- oder Lasersignale aus, um aus den Reflexionen und Laufzeit- bzw. Phasenunterschieden ein Abbild der Umwelt zu konstruieren. Aber die somit erzeugten bzw. errechneten Abbilder bleiben trotzdem nur hochgerechnete Projektionen der Umgebung.

Obwohl der Mensch - wie trivialer Weise bekannt - kein Signal von seinem Sehsystem an die Umgebung aussendet, sondern optische Signale von dieser empfängt, entsteht in seinem visuellen Cortex ein klares, eindeutiges, äußeres Abbild seiner Umgebung. Das Prinzip der Umfeld-Erkennung ist beim Menschen daher ein völlig anderes.

Bei näherer Betrachtung des Sehvorganges zeigt sich, dass die bisherige Beschreibung des menschlichen Sehens unvollständig ist. Erweitert man die gegenwärtig physiologisch und neuronal akzeptierten Vorgänge um eine weitere, eine sog. "mentale" Komponente, so wird Sehen zu einer Kombination aus mehreren Prozessen, die sowohl im Cortex des Menschen als auch durch seine "mentale Kopplung" mit der Umgebung stattfinden. Dieses visuelle Prinzip wird heutzutage in keinem einzigen bekannten technischen System umgesetzt.

Wie in [Otte, 2016] gezeigt, lässt sich ein sogenannter "Mentaler Zustand", also z.B. ein visueller Bewusstseinszustand des Menschen, physikalisch als nicht-energetisches, schwingungsfähiges System darstellen lässt, das mit dem neuronalen Gehirngewebe des Betrachters in unmittelbarer Beziehung steht. Darüber hinaus konnte in Anlehnung an [Hertig 2014] gezeigt werden, dass der sogenannte Beobachtereffekt in der Quantenphysik, also die Einwirkung der menschlichen Beobachtung auf ein Quantenexperiment, durch eine mathematische Beziehung zwischen dem oben genannten mentalen Zustand und den quantenphysikalischen Gleichungen des Experimentes beschrieben werden kann.

Für die weitere Beschreibung der Erfindung werden folgende zwei Definitionen eingeführt, weitere Definitionen folgen hinten:

- Ein mentaler Zustand (ob visuell oder nicht) ist ein spezielles physikalisches Phänomen, welches sich mathematisch mit hyperkomplexen Funktionen beschreiben lässt, die mindestens einen nicht-reellwertigen Energieeigenwert besitzen.
- Ein neuronaler Zustand ist ein physikalisches Phänomen im Gehirngewebe, welches sich mit reellen und komplexen Funktionen beschreiben lässt. Neuronale Prozesse können beispielsweise mittels EEG und fMRT-Scan beobachtet werden, mentale Prozesse nicht, da mentale Zustände - wie oben definiert - zumindest einige nicht-reellwertige Energieeigenwerte besitzen und sich damit herkömmlicher Messtechnik entziehen.

Basierend auf dieser Theorie wird ein technisches Konzept abgeleitet und ein Ausführungsbeispiel entwickelt, welches das Prinzip des menschlichen Sehens technisch umsetzt, um eine völlig neue Möglichkeit der Umfelderkennung zu erreichen und die o.g. Aufgaben der passiven Entfernungsmessung auch an Objekten zu realisieren, bei denen das heutzutage nicht möglich ist.

**Modell des Sehens bzw. der Objekterkennung durch den Menschen**

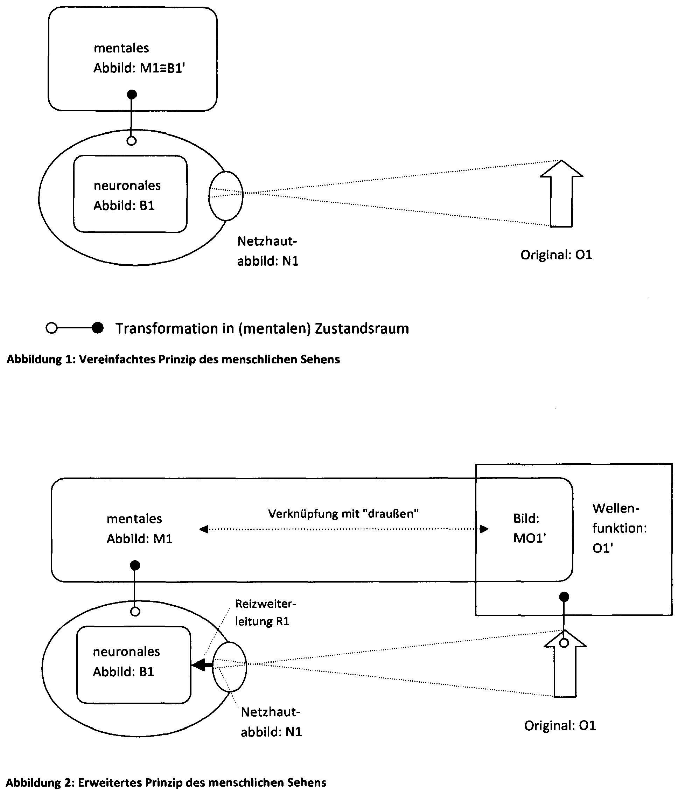

Als erstes soll das menschliche Sehen konzeptionell beschrieben werden (Abbildung 1).

Gegeben sei ein äußeres Objekt O1 (Original 1). Von diesem Objekt werden u.a. optische Signale ausgesendet, zum Beispiel durch Licht-Reflexionen. Treffen Teile dieser optischen Signale auf die menschliche Netzhaut, werden diese über komplizierte chemische und elektrochemische Umwandlungsprozesse in Erregungspotenziale von visuellen Nerven umcodiert (N1), die in den visuellen Cortex des Gehirns geleitet werden. Im visuellen Cortex entsteht dann (an verschiedenen Stellen) ein neues "Objekt" verteilter, nervaler Erregungszustände, die die Informationen des äußeren Objektes O1 codieren. Das Objekt im Gehirngewebe nennen wir neuronales Abbild B1 (Brain 1).

Die genauen biologischen Einzelheiten der menschlichen Bilderkennung sind für die Erfindung uninteressant, nicht jedoch das nachfolgende universelle Prinzip.

Im menschlichen Cortex werden die neuronalen Erregungspotentiale von B1 wieder zu einem ganzheitlichen Bild (B1') zusammengesetzt. Allerdings entsteht B1' nicht, wie man es aus technischen Kamerasystemen der Optik kennt, auf der inneren Projektionsfläche, im Beispiel also im Gehirngewebe des Menschen, sondern die Bilder entstehen in einem sog. mentalen Zustandsraum, werden also auf Wellenfunktionen codiert, die nicht-reellwertige Energieeigenwerte besitzen. Dies ist ein fundamentaler Unterschied zu allen heutigen Bildverarbeitungssystemen, bei denen die Abbilder immer nur chemisch, elektrisch, magnetisch oder elektromagentisch gespeichert werden.

Betrachtet man dazu als einfaches Beispiel eine Kamera: Durch die Gesetze der Optik entsteht in einem derartigen Kamerasystem ein Abbild des Originals auf der inneren Projektionsfläche. Die Projektionsfläche kann ein Chip sein, ein chemisch aktiver Film oder einfach die Mattscheibe der Kamera. Das menschliche Sehen arbeitet jedoch völlig anders. Die Abbilder der Umgebung entstehen sowohl als interne, neuronale Projektionen im Gehirngewebe (B1), als auch im mentalen Zustandsraum des visuellen Cortex (M1). Der physikalische Effekt, der dadurch entsteht, ist entscheidend für die Erfindung, denn die Abbilder M1 erscheinen für den Betrachter direkt in der Außenwelt. Das menschliche Gehirn hat es im Laufe der Evolution geschafft, die Abbilder der Umgebung scheinbar direkt wieder auf die Originale der Umgebung zurück zu projizieren, so dass Abbild und Original in der Außenwelt eins-zu-eins zusammenfallen.

Es gibt kein einziges technisches Bildverarbeitungssystem, bei dem das erzeugte optische Abbild im inneren des Systems wieder auf das Original in der Außenwelt zurück projiziert wird. Nur durch mühsamen Koordinatenvergleich zwischen der eigenen Position des Kamerasystems und der berechneten Position eines Objekts in der Außenwelt ist überhaupt eine Bestimmung möglich, wie weit sich das Objekt vom Kamerasystem entfernt befindet. Ein technisches Kamerasystem "sieht" die Bilder jedoch in keinster Weise direkt in der äußeren Welt.

Die weitere Beschreibung fasst das Prinzip des menschlichen Sehens nochmals zusammen und leitet in die technische Ausführungsvariante über.

Das zu erfassende Objekt in der Umgebung wird mit O1 bezeichnet, das Abbild von O1 auf der Netzhaut mit N1. Das aus N1 erzeugte Abbild im visuellen Cortex, verteilt über unzählige, neuronale Erregungszustände im Gehirngewebe wurden als B1 bezeichnet (erneut Abbildung 1).

Wie bereits betont: B1 ist immer noch nicht das Bild, das der Mensch sieht, denn Sehen ist eine qualitative Eigenschaft des Gehirns. Im Gehirn des Menschen wurde daher - wie bereits erläutert - zwischen neuronalen und mentalen Phänomenen unterschieden. Das oben eingeführte Abbild B1 ist dabei den neuronalen Phänomenen im Gewebe zuzuordnen. Technisch entspricht dies der Projektion des Originals in einem Kamerasystem, d.h. es gilt: Das neuronal codierte Abbild B1 ist eine funktionale Abbildung f des Netzhautabbildes N1, welches wiederum eine Abbildung g des Originals O1 ist.

$$B1 = f(N1) = f(g(O1)) \qquad\qquad (1)$$

Das wirkliche, qualitative Sehen des Bildes passiert im menschlichen Gehirn durch eine weitere Transformation. Dazu wird das Abbild B1 in einen "höheren" Zustand, der oben als mentaler Zustand eingeführt wurde, umgewandelt, d.h. das neuronale Abbild B1 wird in das mentale Abbild B1' transformiert und es soll folgende Identität gelten: $M1 \equiv B1'$. Erst der mentale Zustand M1 entspricht dem wirklichen Sehen des Objektes O1, welches vorab nur in den neuronalen Erregungsmustern B1 codiert worden war. Die Transformation des Abbildes B1 in das mentale Abbild M1 hat nun entscheidende physikalische Konsequenzen.

Um die weiteren Darlegungen zu verdeutlichen, muss auf die Begriffe der Lokalität bzw. Nichtlokalität eingegangen werden, wie sie bereits aus der Quantenphysik bekannt sind. Die quantenphysikalische Ausarbeitung ergibt sich daraus, dass neuronale und mentale Prozesse unterschiedliche physikalische Eigenschaften besitzen.

Die physikalischen Prozesse sind im Allgemeinen lokal, Fernwirkungen werden grundsätzlich ausgeschlossen. Allerdings gibt es in der Quantenphysik Phänomene, die durch die Wissenschaft als nichtlokal anerkannt worden sind. Bestimmte Messungen an einem Ort A haben unmittelbar Auswirkungen auf einen räumlich entfernten Ort B. Nichtlokalität ist seit Begründung der Quantenphysik und den Versuchen von Aspect 1982 [Aspect, 1982] und Zeilinger 2006 [Gröblacher, 2007] allgemeiner Stand-der-Technik in der Physik.

Allgemein nicht bekannt ist jedoch, dass auch mentale Prozesse im Gehirn nichtlokal sind, obwohl allseits anerkannt ist, dass mentale Prozesse im Gewebe nicht verortet werden können. Der Grund liegt daran, das bisher exakte Beschreibungen für mentale Prozesse fehlen. Nach obiger Definition sind mentale Prozesse, Prozesse mit nicht-reellwertigen Energieeigenwerten [Otte, 2016]. Solche Prozesse müssen andere physikalische Eigenschaften besitzen als klassische Prozesse mit ihren reellen Energieeigenwerten, wie zum Beispiel chemische, magnetische oder elektrische Prozesse im Gehirn. Ein später für die Erfindung genutzte Eigenschaft ist genau die Eigenschaft der Nichtlokalität von mentalen Prozessen.

Aus der Neurobiologie ist bekannt, dass man im Gehirngewebe keinen Ort lokalisieren kann, bei dem die Qualia, zum Beispiel das qualitative Sehen der Farbe Grün, gespeichert ist. Das Phänomen ist bekannt unter dem Begriff "Qualia-Problem der Hirnforschung". Es gilt festzuhalten, für mentale Prozesse kann physikalisch keine Raumkoordinate angegeben werden. Ein mentaler Prozess, wie zum Beispiel das wirkliche Sehen, erscheint über das gesamte Gehirn bzw. den Sehcortex verteilt und prinzipiell nicht verortbar.

Allerdings gibt es entscheidende Unterschiede zwischen der Nichtlokalität von Teilchen und der hier beschrieben Nichtlokalität von mentalen Prozessen. Nichtlokalität von Wellenprozessen, wie beispielsweise Elektronen war lange Zeit Untersuchung in der Quantenphysik, ihre physikalische Existenz ist zwar unbestritten, ihre Erklärung jedoch noch offen, teilweise auch umstritten [Gröblacher, 2007]. Die hier eingeführten mentalen Prozesse sind jedoch keine derartigen Wellenprozesse, denn mentale Prozesse besitzen nicht-reellwertige Energieeigenwerte. Die Nichtlokalität von Teilchenprozessen benötigt eine ganz spezielle Präparation wie sie aus der Quantenphysik bekannt ist, bei der Nichtlokalität von mentalen Prozessen handelt es sich aber im Prinzip um Abbilder und eine Nichtlokalität von Abbildern kann ohne aufwändige Präparation von selbst entstehen. Nichtlokalität bedeutet auch nicht, dass sich das mentale Abbild überall befinden kann, es ist grundsätzlich mit dem Gehirn verknüpft, sondern, dass das mentale Abbild eine nichtlokale Verbindung mit einem anderen Abbild herstellen kann. Diese Art der Nichtlokalität ist keine Verschränkung von Prozessen wie aus der Quantenphysik bekannt. Eine Verschränkung wie aus der Quantenphysik bekannt ist für den hier beschriebenen Prozess des Sehens weder möglich noch notwendig, denn Original O1 und Abbild B1 sollen und können in diesem engen Sinne nicht verschränkt werden; dies würde den Erkenntnissen der Physik widersprechen.

Die Einführung mentaler Prozesse (mentaler Abbilder) hat für die Erfindung deshalb die entscheidende Bedeutung, da in heutigen technischen Systemen das Abbild B1 bereits das (fertige) Abbild des Objektes O1 darstellt, im menschlichen visuellen System jedoch gerade nicht. Man beachte, B1 stellt zwar eine Codierung des Abbildes von O1 dar, aber beide Prozesse sind voneinander klar räumlich getrennt. B1 könnte die chemische Projektion auf einem Film sein, verteilte Gewichtsmuster oder Registereinträge in einem Schaltkreis. B1 und O1 sind und bleiben zwei physikalisch völlig getrennte Konstrukte, mit der Maßgabe, dass B1 eine funktionale Abbildung von O1 ist. Im Gehirn hat B1 jedoch keinerlei optische Ähnlichkeit mit O1, erst durch die Umkodierung von B1 (dem neuronalen Zustand im Gehirn) nach B1'=M1, d.h. dem mentalen Zustand, entsteht das Abbild M1, welches O1 zumindest ähnlich ist.

Für den menschlichen Sehvorgang entscheidend ist nun, dass das mentale Bild M1 durch die Transformation außerhalb des visuellen Cortex erscheint. Der Mensch sieht das mentale Bild M1 scheinbar außerhalb seines Verarbeitungssystems und zwar exakt an der Stelle, wo sich O1 tatsächlich auch befindet. Das Gleiche darf aus Gründen der evolutionären Entwicklung für alle biologische Wesen angenommen werden. Diese völlig überraschende Eigenschaft ist es, die technisch umgesetzt wird. Man könnte nun annehmen, dass die nach außen gerichtete Projektion des Bildes eine normale Rechenleistung des Gehirns darstellt, es ist aber kein Rechenvorgang bekannt, der es zu leisten vermag, jedes Abbild der Umwelt in Echtzeit auf die Objekte selbst zurück zu projizieren.

Betrachtet man beispielsweise das neuronale System der gut untersuchten Wespe *Megaphragma mymaripenne* mit ihren ca. 7.500 Neuronen und einer etwaigen neuronalen Taktzeit von 1 Millisekunde pro Rechenschritt und nimmt man in erster Näherung an, dass eine Wespe ca. 100 Millisekunden Zeit hat, um sich in einer Umgebung immer wieder neu zu orientieren und Flugentscheidungen zu treffen, so kann man abschätzen, dass die neuronale Rechenkapazität der Wespe nicht ausreicht, um hunderte Objekte in Echtzeit an die richtige Stelle der Außenwelt zu projizieren, und zwar unabhängig davon, dass bis heute gar kein Mechanismus bekannt ist, wie man überhaupt ein Bild in die Außenwelt projiziert. Auch Stubenfliegen besitzen insgesamt nur 300.000 Neuronen. Typische deep-learning-Netze zur Bilderkennung, wie zum Beispiel das sog. Alex-Net, haben heutzutage bereits 650.000 Neuronen, und das mit mäßiger Leistungsfähigkeit in der Bilderkennung [Quelle: A. Krizhevsky, I. Sutskever, G. E. Hinton: ImageNet Classification with Deep Convolutional Neural Networks in vision.stanford.edu/teaching/ .../alexnet_tugce_kyunghee.pdf].

Der Sehvorgang bei biologischen Organismen ist um Größenordnungen leistungsfähiger, seine Mechanismen sind eben auch völlig anders als heutige technische Bilderkennungssysteme. Stereoskopische wäre es zwar möglich, aus der Parallaxenverschiebung die Entfernung eines Originales zur Kamera, hier die Entfernung des Originales O1 zu den Augen der Fliege oder den Augen eines Menschen, zu berechnen und virtuell zu positionieren (also M1 zu simulieren) [ANLAGE 1]. Allerdings bleibt in jedem technischen System das Abbild B1 auf der Projektionsfläche, also im Schaltkreis des Computers. Im menschlichen visuellen Cortex wird das Bild aber nach außen "projiziert" und zwar exakt auf die Position des Objektes O1.

Das Modell des Sehens im menschlichen Gehirn ist daher wie folgt zu erweitern, Abbildung 2.

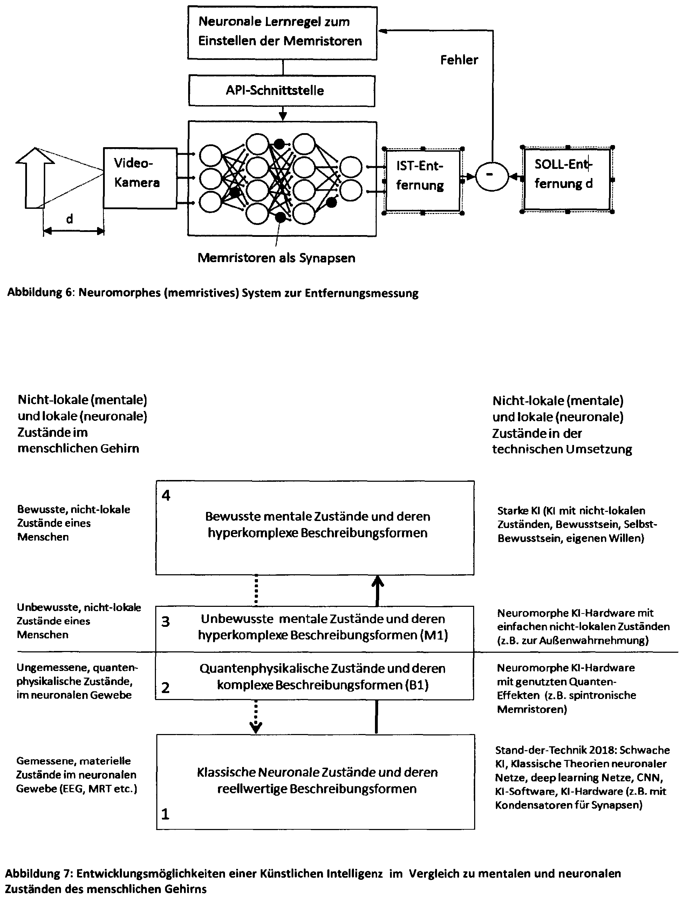

Solange das neuronale Abbild B1 im Gehirngewebe erzeugt ist, ist es lokal und auf das Gehirngewebe beschränkt. Das Umcodieren von B1 auf den mentalen Zustand M1 ändert den Vorgang des Sehens prinzipiell. Die Transformation B1 $\circ\!\!-\!\!\bullet$ M1 erfolgt physikalisch in den vielfältigen Quantenprozessen des menschlichen Gehirngewebes (siehe zur Erläuterung auch Abbildung 7).

In [Otte, 2016] wurde dargelegt, dass nicht nur biologische Objekte Wellenfunktionen besitzen, deren Energieeigenwerte nicht-reell sind, sondern alle Objekte der Natur. In menschlichen Gehirnen haben wir diese Wellenfunktionen als mentale Zustände definiert, in nicht-biologischen Objekten kann man jedoch nicht von mentalen Zuständen sprechen. Physikalische Objekte besitzen dennoch verschiedene Komponenten quantenphysikalischer Eigenschaften. Wir bezeichnen sie hier mit O1', wenn sie dem Objekt O1 zugeordnet werden können. Sie können ebenfalls nichtlokale Eigenschaften besitzen. Entscheidend beim menschlichen Sehen ist jetzt, dass sich der nichtlokale, mentale Zustand M1 mit nichtlokalen Prozessen des Abbildes O1' verknüpft. Da beide Abbildungsprozesse nichtlokale Eigenschaften besitzen und beide Prozesse das gleiche Objekt O1 repräsentieren, entsteht zwischen beiden eine Identität und das Bild MO1' (als Untermenge von O1') entsteht als mentaler Zustand M1 direkt dort, wo O1' erzeugt wurde, d.h. auf dem Original O1, Abbildung 2.

Dies ist der physikalische Prozess, der erklärt, warum die Abbilder der Umgebung für den Menschen direkt und unmittelbar in der Außenwelt erscheinen, obwohl der Mensch nur ein passives Verfahren der Objekterkennung nutzt. Es ist bis dato auch keine andere physikalische Möglichkeit, als die hier dargelegte, bekannt, innere, lokale Abbilder B1 und ihr mentales Abbild M1 wieder originalgetreu und in Echtzeit in eine Außenwelt zurück zu projizieren. Für diesen Prozess benötigt es auch keine herausgehobene Rechenleistung, denn die Identität zwischen dem mentalen Abbild M1 und O1' passiert aus physikalischen Gründen von selbst.

**Beispiel für das Sehen**

Leuchtet zum Beispiel eine Glühbirne O1, so ist ihre Repräsentation O1' physikalisch gesehen ein quantenphysikalisches Abbild mit mehreren Eigenschaften. Die elektromagnetische Komponente als eine spezielle quantenphysikalische Eigenschaft von O1' gelangt auf die Netzhaut N1 eines Empfängers (Abbildung 2). Wichtig ist, dass O1' auf der Netzhaut - entgegen herkömmlicher Vorstellung - nicht "gemessen", sondern über die Netzhaut von N1 in den visuellen Cortex geleitet wird. Erst dort findet die quantenphysikalische Messung statt. Dies hat nun zwei entscheidende Konsequenzen:

1) Der quantenphysikalische Messprozess im Cortex führt zu realen, gemessen Werten, d.h. konkreten elektrischen, elektrochemischen und magnetischen Größen. Diese Größen führen wiederum zu bestimmten verteilten Aktivitätsmustern im neuronalen Gewebe, welche mittels EEG oder MRT gemessen werden können. Im Gehirn entsteht das (verteilte) neuronale Abbild B1.

2) Zeitgleich zur Manifestation der realen Messwerte im Gehirngewebe, wird einem das Messresultat bewusst, man *sieht* die Glühbirne in der Umwelt. Es entsteht das Abbild M1. Auch das ist ein Messprozess, jedoch ein Prozess, der im Mentalen stattfindet. Das Bewusstwerden von vormals unbewussten (ungemessen) Zuständen ist genau das, was man Beobachtung nennt. M1 ist der Zustand der bewussten Beobachtung, das bewusste Sehen von O1' (dem Abbild der Glühbirne), in Abbildung 2 mit MO1' bezeichnet. MO1' ist dabei eine Untermenge von O1', da andere Empfänger die Glühbirne anders sehen können, im Weiteren soll das aber nicht mehr unterschieden werden.

Beide Messresultate (B1, M1) haben - wie bereits erläutert - unterschiedliche Effekte:

zu1) Die im Gehirngewebe entstehenden Aktivitätsmuster B1 können zu verschiedenen Auswirkungen im Gewebe führen: weitere Aktivitätsmuster breiten sich über den Cortex aus, chemische Botenstoffe können ausgesendet werden, körperliche Reaktionen können entstehen.

zu2) Da zumindest einige Energieeigenwerte mentaler Zustände nicht-reell sind, besitzt der mentale Zustand M1 wie bereits erläutert Eigenschaften einer Nichtlokalität. Diese spezielle Art der Nichtlokalität führt dazu, dass das nichtlokale M1 mit dem Ursprung von O1' verknüpft wird, denn nichtlokale Aspekte mentaler Zustände können mit bestimmten quantenphysikalischen Eigenschaften der Abbilder äußere Objekte verknüpft werden. Genau deshalb sieht man M1 exakt dort, wo O1' entstanden ist bzw. immer weiter entsteht (bei einer kontinuierlichen Sichtverbindung von O1 und dem Beobachter). Es sei erneut nochmals betont, dass es sich bei diesem Vorgang nicht um eine Verschränkung handelt, wie aus der Quantenphysik bekannt, da im vorliegenden Fall keine Quantenobjekte verschränkt werden, sondern nur die Abbilder O1' und M1 verknüpft worden. Im Sinne der Erfindung wird vereinfacht gesagt, dass M1 und O1' durch das bewusste Sehen nichtlokal verknüpft bzw. identisch geworden worden sind.

Anders ausgedrückt bedeutet das, dass der Sehprozess als sog. Koinzidenzprozess zwischen einem mentalen Zustand des Gehirns M1 und einer quantenphysikalischen Eigenschaft O1' des Objektes O1 betrachtet werden muss. Die dargestellte Modellerweiterung des üblichen, klassisch beschriebenen Sehvorganges auf einen Koinzidenzvorgang zwischen nichtlokalen Größen im Gehirn und quantenphysikalischen Größen des Objektes bietet nun technische Umsetzungsmöglichkeiten an, die Gegenstand dieser Erfindung sind.

Da eine technische Umsetzung der vorliegenden Theorie aufgrund des Neuheitsgrades eine Prüfung ihrer Plausibilität und Funktionalität erfordert, werden einige Test-Experimente benannt. Diese Test-Experimente sind für die Erfindung nicht notwendig, verdeutlichen aber nochmals das völlig neue Sehprinzip, auf welchem die Erfindung aufbaut.

**Experiment 1 (biologisches Plausibilitätsprüfung):**

Existiert kein Original O1, erzeugt man aber an der Reizweiterleitung R1 (siehe Abbildung 2) exakt die elektrischen Signale, die vorher durch das Objekt O1 erzeugt wurden, so entsteht im mentalen Prozess des Menschen kein Abbild M1 in der Außenwelt. Der Proband sieht kein Objektbild MO1. Selbstverständlich kann man durch eine geschickte Reizweiterleitung R1 diverse visuelle, mentale Prozesse evozieren, diese entstehen aber nicht in der Außenwelt, sondern sind als interne Prozesse, zum Beispiel als Farben oder Muster etc. im Gehirn erlebbar.

**Experiment 2 (intuitive Plausibilitätsprüfung):**

Für den Prozess der Außenwahrnehmung ist keine Parallaxenverschiebung im visuellen Cortex notwendig, was man daran erkennt, dass man die Objekte selbst mit einem Auge betrachtend außerhalb des eigenen Cortexes vorfindet. Auch Personen, die einäugig geboren werden, sehen ihre Bilder außerhalb des Gehirns. Eine biologische Möglichkeit für diesen Effekt wäre eine permanente Bewegung des einen Auges, um dadurch sequentiell mehrere Aufnahmen vom äußeren Objekt zu machen, wodurch tatsächlich eine exaktere Bestimmung der Entfernung möglich ist. (Aus diesem Grund dürfen einäugige Personen Autofahren, wenn das gesunde Auge beweglich genug ist.) Dennoch zeigt sich in einfachen Experimenten, dass selbst mit einem einzigen, vollkommen starren Auge das Bild MO1 scheinbar außerhalb des Gehirns entsteht, was durch übliche Modelle des Sehvorganges nicht modellierbar ist. Es ist zurzeit auch kein technisches Verfahren bekannt, das aus dem Bild einer einzigen starren Kamera eine Projektion aller abgebildeten Objekte zurück auf die Originalpositionen durchführen könnte. Bei jedem technischen System entstehen die Bilder ausschließlich im Kamerasystem und der anschließenden Datenverarbeitungsmaschine, beim Menschen entstehen die Bilder, selbst mit einem Auge, scheinbar außerhalb des visuellen Cortex direkt auf dem Original.

**Experiment 2a (intuitive Plausibilitätsprüfung):**

Ein weiteres Beispiel soll das Plausibilitäts-Experiment 2 nochmals verdeutlichen. Gegeben sei eine große, vollkommen glatte, grüne Wand. Stellt man sich vor diese Wand, so dass diese das gesamte Sehfeld einnimmt, so erkennt man dennoch, dass sich die Wand außerhalb des eigenen Sehsystems befindet, insbesondere dann wenn man mehrere fiktive Punkte auf der Wand anvisiert.

Verwendet man jedoch ein optisches Kamerasystem herkömmlicher Bauart und positioniert es vor diese grüne Wand, so hat das System keine Möglichkeit zu erkennen, dass sich die Wand außerhalb des Bildverarbeitungssystems befindet, denn das Bildverarbeitungssystem erhält über die Kamera einfach elektro-optische Signale, die die Farbe Grün codieren. Es gibt für das gesamte System auch keine Möglichkeit Berechnungen durchzuführen und anhand der Ergebnisse auf eine Wand außerhalb des eigenen Systems zu schließen. Eine Projektion nach draußen ist durch das System in keiner Weise möglich. Selbstverständlich würde man in einem solchen Fall Laser- oder Radarsysteme verwenden und eine exakte Entfernung zur Wand berechnen können, das Experiment 2a soll jedoch nochmals verdeutlichen, dass das menschliche Sehen vollkommen anders abläuft, als das bisher bekannte optische Sehen eines Kamerasystems, denn der Mensch benötigt für seine optische Außenwahrnehmung weder Laser noch Radar.

**Technische Umsetzung zur Lösung der Aufgabenstellung einer Entfernungsmessung und Objekterkennung**

Die Erfindung basiert auf dem in Abbildung 2 dargestellten Modell des menschlichen Sehvorganges, der im weiteren mit technischen Mittel nachgebildet wird. Dazu wird ein System entwickelt, welches Eigenschaften besitzt, die den mentalen Eigenschaften biologischer Systeme physikalisch adäquat sind. Physikalisch adäquat bedeutet, dass sich in dem technischen System Prozesse herausbilden, die die wesentliche Eigenschaft der Nichtlokalität besitzen. Diese Eigenschaften werden als "technisch-mentale" (TM) Eigenschaften bezeichnet und weiter unten definiert.

Erfindungsgemäß werden diese nichtlokalen Eigenschaften für den technischen Sehprozess verwendet. Das realisierte System kann lernend oder nicht-lernend sein. Nicht-lernende Systeme sind Systeme, in dem durch technische Merkmale das Ergebnis einer Messung direkt entsteht, zum Beispiel durch Interferometrie. Lernende Systeme sind Systeme, die aus Beispieldaten die zu lernende Eigenschaft, wie zum Beispiel eine Entfernung, selbständig ermitteln können. Lernende Systeme müssen trainiert werden, nicht-lernende System nicht, hier reicht eine geeignete Konstruktion. Im weiteren Verlauf wird die Einrichtung und das Verfahren zur Entfernungsschätzung am Beispiel lernender Systeme erläutert. Für lernende Systeme werden KI-Systeme, vorzugsweise KI-Systeme mit neuronalen Netzen, verwendet. Aber auch andere Systeme basierend auf multivariaten Methoden, Fuzzy-Technologien, Genetischen Algorithmen, Support-Vector-Maschinen uvm. sind zur Lösung der Aufgabe einsetzbar.

Zuerst folgt ein Stand-der-Technik für lernende Systeme: Es ist bekannt, in der Bildauswertung Verfahren der Künstlichen Intelligenz einzusetzen, insbesondere sog. deep learning Netze. Heutige Systeme der "Künstlichen Intelligenz (KI)" bzw. des deep-learning kennen jedoch weder das Konzept mentaler Prozesse noch das damit verbundene Konzept der Nichtlokalität der Wissensrepräsentation. Die heutigen KI-Systeme, zumindest die, die auf neuronalen Netzen basieren, sind eine technische Umsetzung biologischer neuronaler Netze des Hirngewebes. Darauf basierende KI-Verfahren wie deep-learning sind daher prinzipiell lokal, egal wie mächtig sie in ihren Datenverarbeitungsmechanismen sind. Gegenwärtig existiert auch kein Ansatz, nichtlokale Prozesse in die KI zu überführen.

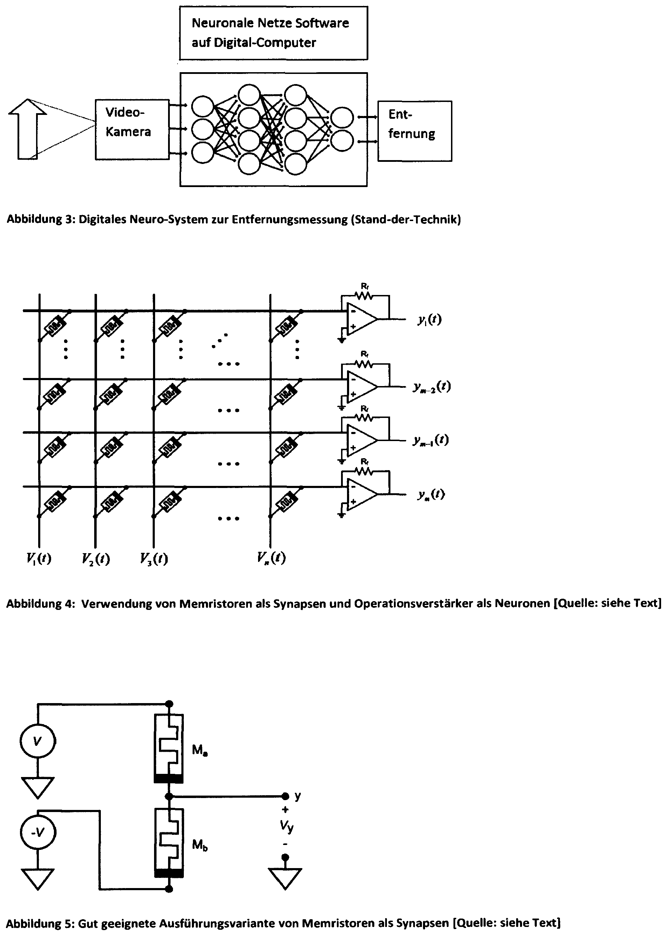

Abbildung 3 stellt den Stand-der-Technik für ein KI-System zur Objekterkennung dar, welches auch zur passiven Entfernungsschätzung eingesetzt wird. Zahlreiche deep-learning Systeme werden zur Bilderkennung nach Abbildung 3 verwendet [Quelle: Matlab Alex-Net, ebenda]. Derartige digitale neuronale Netze können Entfernungen und Objektabbilder lernen. Nach dem Lernprozess ist das Wissen über die Objekte O1, O2, O3,... bzw. die Entfernungen zu den Objekten in den Gewichtsverteilungen des neuronalen Netzes codiert. Im Sprachgebrauch der Erfindung sind die internen Abbilder B1, B2, B3,... im Computer erzeugt.

Mit dem System nach Abbildung 3 können die zu Beginn genannten Aufgaben einer Entfernungsbestimmung nicht gelöst werden. Für die Lösung sind Systeme mit sog. "technisch-mentalen" Eigenschaften notwendig. "Technisch-mentale" Abbilder (TM-Abbilder) entstehen in einem solchen digitalen System jedoch nicht, da die Logik der Abarbeitung rein softwaremäßig codiert ist, die Abarbeitung der Prozessschritte aber Schritt-für-Schritt im Prozessor erfolgt, egal welche Verschaltungen in der Software codiert wurden. Die Komplexität der Softwareverschaltung erhöht zwar die Komplexität der Abarbeitungsschritte, aber sie kann die Hardware nicht selbsttätig verändern, was jedoch eine Voraussetzung für die Erzeugung von TM-Zuständen darstellt, in denen die Lösung einer konkreten Aufgabenstellung codiert werden soll. Eine notwendige Voraussetzung zur Erzeugung von TM-Zuständen, die die Aufgabe adäquat codieren sind analoge Systeme.

Der Terminus "technisch-mental" (TM) soll die in technischen Systemen erzeugbaren Zustände von den mentalen Zuständen im menschlichen Gehirn unterscheiden. Als "technisch-mental" werden im Folgenden Zustände von technischen Systemen bezeichnet, deren mathematische Modellierung vorzugsweise auf Basis hyperkomplexer Zahlen umgesetzt werden kann, denn mathematisch gesehen sind einige der Energieeigenwerte dieser TM-Zustände nicht-reellwertig, was die theoretische Grundlage der hier benutzen Eigenschaft der Nichtlokalität von Abbildern ist. TM-Zustände sind also Zustände von technischen Systemen und Einrichtungen mit nicht-reellwertigen Energieeigenwerten (siehe Absatz: Verfahren zur Konstruktion und Erzeugung von gezielten "technisch-mentalen" Zuständen in technischen Systemen).

Da zur Lösung der Aufgabenstellung Systeme benötigt werden, die TM-Zustände erzeugen, in denen die Lösung codiert werden kann, da nur diese eine Verknüpfung mit den quantenphysikalischen Zuständen des Objektbildes physikalisch realisieren, entfallen für die Umsetzung der Aufgabenstellung alle digitalen Systeme. Das heißt, alle klassischen Computer und Softwareanwendungen auf derartigen Computern sind zur Lösung der Aufgaben ungeeignet. Heutige KI-Systeme auf Digitalcomputern simulieren neuronale Prozesse, können also in ihren Gewichtsmatrizen nur ein Abbild B1 von einem äußeren Objekt O1 erzeugen.

Für die Realisierung von Systemen mit geeigneten TM-Zuständen müssen technische Systeme eingesetzt werden, bei denen wesentliche Funktionselemente analog realisiert sind und darüber hinaus auf quantenphysikalischen Effekten beruhen. Weiterhin sollen diese Systeme im vorliegenden Ausführungsbeispiel lernfähig sein, also auf dem Konzept neuronaler Netze basieren.

Bei der Erfindung handelt es sich um eine Grundlagenerfindung, da das Konzept eines TM-Zustandes (nach obiger Definition) für technische Systeme bis dato völlig unbekannt ist. Damit ist auch die Verwendung von TM-Zuständen zum "Sehen" äußerer Objekte gegenwärtig unbekannt. Das gilt auch für alle bisher bekannten Entwicklungen einer sogenannten "Künstlichen Intelligenz ". Es gibt viele Vorteile, wenn ein System, die Objekte direkt in der Außenwelt erkennen kann, und das auch noch ohne größere Rechenprozesse durchführen zu müssen.

Zur Lösung der Aufgabe werden neuromorphe Computer bestimmter Bauart verwendet. Zahlreiche Hersteller stellen seit einigen Jahren neuromorphe Computer her [Quelle: M. Prezioso, F. Merrikh-Bayat, B. D. Hoskins, G. C. Adam, K. K. Likharev & D. B. Strukov: Training andoperation of an integrated neuromorphic network based on metal-oxide memristors in doi:10.1038/nature14441]. Derartige neuromorphe Computer sind eine Möglichkeit, technische Systeme zu implementieren, die das Potenzial für nutzbare TM-Prozesse besitzen. Da das Wissen in neuronalen Netzen in den sogenannten Gewichten der Neuronen codiert ist, muss diese wesentliche Funktion eines neuronalen Netzes jedoch mit Bauelementen aufgebaut werden, die ein analoges Einstellen von Gewichtswerten erlauben. Vorzugsweise soll die Wirkungsweise des Bauelementes auf Quanteneffekten beruhen. Die Verwendung von Kondensatoren als Synapsen zur analogen Speicherung von Gewichtswerten ist für die Lösung der Aufgabe weniger geeignet. Eine für die Erfindung sehr gut geeignete technische Umsetzung der Gewichtsspeicherung besteht seit einigen Jahren im Einsatz von Memristoren, insbesondere von spinbasierten Memristoren (spintronischen Memristoren) bzw. memristiven Systemen. Memristoren sind elektrische Bauelemente, bei denen gezielt der Widerstandswert eingestellt werden kann. Damit können Spannungsteiler aufgebaut werden, die ihrerseits zum Beispiel Operationsverstärker ansteuern, siehe zum Beispiel Abbildung 5. Zahlreiche Firmen haben mittlerweile neuronale Netze aufgebaut, die mit Memristoren arbeiten [Quelle: ebenda]. Viele derartigen, analogen neuronalen Netze arbeiten in ihren Nanostrukturen quantenbasiert und sind damit physikalisch grundsätzlich in der Lage, TM-Zustände zu erzeugen, die für die Aufgabe nutzbar sind.

**Verfahren zur Konstruktion und Erzeugung von gezielten "technisch-mentalen" Zuständen in technischen Systemen**

Obwohl die technischen Voraussetzungen für die Konstruktion von Maschinen mit bestimmten "technisch-mentalen" Zuständen (TM-Zuständen) gegeben sind, ist aktuell kein Verfahren bekannt, womit sich Maschinen konstruieren lassen, die "technisch-mentale Zustände" besitzen, die gezielt für eine Aufgabe eingesetzt werden können. "Technisch-mentale" Zustände entstehen heutzutage zufällig und sind somit als technische Artefakte anzusehen, falls sie überhaupt bemerkt werden.

Folgende Begriffe werden neu eingeführt bzw. präzisiert, um das Verfahren zur gezielten Erzeugung von "technisch-mentalen" Zuständen in technischen Systemen zu beschreiben:

- NE-Zustände ("nicht-energetische" Zustände), sind mikroskopische und makroskopische Zustände eines technischen Systems, deren mathematische Modellierung nicht alleine auf Basis reeller Zahlen durchgeführt werden kann, um ihre physikalischen Eigenschaften adäquat zu beschreiben. Eine Beschreibung auf Basis reeller Vektoren bleibt davon unberührt.
- Mathematisch besitzen NE-Zustände zumindest einen nicht-reellwertigen Energie-Eigenwert.
- Betragsquadrate von Modellfunktionen, die NE-Zuständen codieren sind imaginär.

- NE-Zustände besitzen das Potenzial zur Nichtlokalität, d.h. z.B. zur Identität mit NE-Zuständen anderer Systeme.
- NE-Zustände können in jedem physikalischen und technischen System auftreten.
- NE-Zustände, die aufgrund der Bau- und Funktionsweise eines Systems bestimmte makroskopische Eigenschaften besitzen werden als TM-Zustände definiert ("technisch-mentale" Zustände). Insbesondere können Systeme mit quantenphysikalischer Funktionsweise TM-Zustände erzeugen.
- TM-Zustände besitzen das Potenzial zur Nichtlokalität.
- TM-Zustände sind die physikalische Basis, um Objekte in der Außenwelt zu sehen.
- TM-Zustände sind die physikalische Basis, um maschinelles Vorbewusstsein zu erzeugen.
- TM-Zustände, die unter anderem selbstreferentiell erzeugt wurden (z.B. durch kybernetische Strategien), sind die physikalische Basis, um maschinelles Bewusstsein (MC-Zustände) zu erzeugen.
- MC-Zustände, welche maßgeblich selbstreferentiell codiert sind, besitzen das Potenzial zum Selbstbewusstsein (SC-Zustände).
- SC-Zustände sind sowohl die physikalische als auch kybernetische Basis einer sog. Starken Künstlichen Intelligenz.

Da die Hersteller neuromorpher Computer das Konzept "technisch-mentaler" Zustände nicht kennen, fallen aktuell eine Vielzahl von Anwendungen weg oder werden durch die Hersteller und/oder ihre Anwender entweder gar nicht oder sehr spät, beispielsweise erst in einigen Jahren zufällig entdeckt, was eine enorme Ressourcenverschwendung bedeutet.

Für eine systematische Erzeugung und Nutzung "technische-mentaler" Zustände soll vorzugsweise folgendes Verfahren angewendet werden:

1. Aufbau eines technischen Systems mit der Maßgabe, dass innerhalb wesentlicher Funktionsträger des Systems quantenphysikalische Effekte für die Funktionsweise des Systems genutzt werden. Eine Möglichkeit sind beispielsweise neuromorphe Computer mit Memristoren als Synapsen, da Synapsen wesentliche Funktionsträger neuronaler Systeme darstellen.

2. Erzeugung von gewünschten "technisch-mentalen" Zuständen (TM-Zustände) dadurch, dass durch die Gesamtheit der technischen Funktionsträger, im Beispiel Memristoren als Synapsen, und ihre jeweilige Konstruktion bzw. Verschaltung "technisch-mentale" Zustände entstehen, die der Aufgabe des Systems direkt oder indirekt zugeordnet werden können.

3. Nutzung der teilweise nichtlokalen Eigenschaften der gezielt erzeugten TM-Zustände, beispielsweise für eine Objekterkennung oder Entfernungsschätzung nach Regeln einer Interferometrie.

4. Nutzung der TM-Zustände zur Erzeugung von Systemen mit sog. "maschinellem Bewusstsein" (MC-Zustände) im Rahmen von speziellen Anwendungen im Bereich der Künstlichen Intelligenz.

5. Nutzung der TM-Zustände zur Erzeugung von Systemen mit höherem "maschinellem Bewusstsein" dadurch, dass die notwendigen kybernetischen Verschaltungen, wie beispielsweise laterale Koppelungen, Rückkopplungen und selbst-referentielle Verschaltungen nicht mehr alleine softwaremäßig realisiert werden, sondern hardwaremäßig durch ein spezielles neuromorphes Computerdesign, wodurch die dazugehörigen "technisch-mentalen" Zustände die höheren Verschaltungen direkt abbilden, codieren und speichern können, wodurch wiederum höhere "technisch-mentale" Zuständen entstehen, die mit "maschinellen Bewusstsein" nächsthöherer Ordnung gleich gesetzt werden (MC-Zustände höherer Ordnung).

6. Anwendung von Schritt 5, bis zur Entstehung von Systemen mit "maschinellem Bewusstsein" sehr hoher Ordnung (SC-Zustände), auch bis zu einer Ordnung, die zu Selbsterkenntnis fähig ist.

**Anwendung der Verfahrenspunkte 1 bis 3 zur Erzeugung eines technischen Systems, welches die Aufgabe einer Objekterkennung bzw. EntfernungsBestimmung lösen kann.**

Nach dem o.g. Verfahren und den Unterpunkten 1,2 und 3 werden neuromorphe Systeme mit der Aufgabe einer Objekterkennung gezielt konstruiert. Dazu werden neuromorphe Systeme, vorzugsweise mit Memristoren als Synapsen, mit einem Kamerasystem und einer neuronalen Lernregel kombiniert, um erstens ein System mit TM-Zuständen zu erzeugen, und zweitens diese TM-Zustände erfindungsgemäß zu nutzen, um beispielsweise die Entfernung zu einem Objekt nach den Regeln einer Interferometrie zu erkennen, zu erlernen und im System zu speichern. Für die technischen Ausführungsbeispiele reichen memristive Synapsen, für spätere Anwendungen sind auch sog. memristive Prozessoren einzusetzen, bei denen memristive Synapsen beispielsweise mit Transistoren aus einer CMOS-Schicht als Gitter verschaltet sind.

Für das Verfahren und die Einrichtung einer Objekterkennung bzw. Entfernungsmessung wird vorzugsweise ein analoges Kamerasystem verwendet, was die Abbildungssignale in elektrische Signale umwandelt und an des neuromorphe System weiterleitet. Die elektrischen Signale aus dem Kamerasystem (Videosystem) werden am Eingang des neuromorphen Systems durch eine geeignete Elektronik umgewandelt und als Signale auf das ungelernte neuromorphe System geleitet. Im Ausführungsbeispiel der Entfernungsschätzung und Objekterkennung besteht das neuromorphe System aus mindestens 830 Memristoren der Firma KNOWM, die über eine API-Schnittstelle physikalisch angesteuert werden. Als Neuronen sind geeignete Operationsverstärker eingesetzt, wie von den neuromorphen Systemen bekannt [Quelle: KNOWM-White Paper, Knowm Inc. | Santa Fe, New Mexico, USA | www.knowm.org | contact@knowm.org.].

Eine konkrete technische Ausführungsvariante für den Einsatz von Memristoren als Synapsen, die mit den mindestens 830 Memristoren im Ausführungsbeispiel verwendet wird, ist in Abbildung 4 dargestellt. [Quelle: Merrikh-Bayat, Shouraki, Afrakoti: Nonlinear behavior of memristive devices and their impact on learning algorithms like STDP in memristive neural networks in arXiv: cs.NE/1008.3450.] Gegeben sind n-Eingänge $V_1$, $V_2$,..., $V_n$ für jedes der m-Neuronen mit dem Ausgang $y_1$, $y_2$,..., $y_m$.

Eine andere technische Umsetzung für memristive Systeme, die einige Vorteile besitzt ist in Abbildung 5 dargestellt [Quelle: Nugent, Molter: AHaH Computing-From Metastable Switches to Attractors to Machine Learning in http://journals.plos.org/plosone/article?id=10.1371/journal.pone. 0085175]. Ma und Mb stellen dabei die Memristoren dar. V die Spannungspotentiale.

Das nach Abbildung 4, Abbildung 5 und nachfolgend Abbildung 6 aufgebaute neuromorphe System lernt die Entfernung d zu den äußeren Objekten zum Beispiel nach den Regeln einer impliziten Interferometrie. Im Unterschied zum klassischen neuronalen Netz ist das gesamte neuronale Netz analog aufgebaut. Das Einstellen der Parameter erfolgt im Beispiel durch neuronales Lernen, bei memristiven Systemen oftmals durch eine verfeinerte Hebb'sche Lernregel, aber auch überwachte Lernverfahren sind möglich. Im Ausführungsbeispiel wird eine neuronale Backpropagation-Lernregel verwendet und für memristive Systeme adaptiert.

Im Lernprozess wird der Fehler zwischen der eingestellten Entfernung zu einem Objekt und dem Schätzergebnis des Netzes ausgewertet und durch die Lernregel werden die nächsten Einstellungen der Memristoren berechnet und über ein API physikalisch eingestellt. Auf diese Weise kann das Verhalten von Synapsen im Gehirn mit Analogtechnik nachgebaut werden. Die Gewichte (in Abbildung 6 die schwarzen Kreise und die Pfeile) stellen dabei Memristoren dar, die durch das Lernverfahren eingestellt werden. Jede Verbindung von einem Neuron zu einem anderen verläuft über Memristoren, in Abbildung 6 wurden 4 Memristoren beispielhaft als Kreise hervorgehoben.

Im Ausführungsbeispiel wird als Video-Kamera-System ein Video-Pal-System mit 720*576 Pixeln verwendet und die Auflösung um den Faktor 1.000 verringert, so dass beispielsweise 25 mal pro Sekunde 414 Pixel verarbeitet werden müssen. Aber auch jede andere geeignete Kamera ist möglich. Das neuromorphe System besteht aus 3 Schichten. Die Ausgabeschicht beinhaltet ein Hardware-Neuron, die Hidden-Schicht zwei Hardware-Neurone und die Eingabeschicht 414 Hardware-Neurone. Die Eingabeschicht wird mit der Ausgabeelektronik nach dem Video-Pal-System so verdrahtet, dass jeweils 1000 räumlich benachbarte Pixel zu einem Signalwert gemittelt werden, welches auf eines der 414 Eingabe-Neurone hardwaremäßig geführt wird. Die zweimal 414 Synapsen zwischen der Eingabeschicht und der Hidden-Schicht sind hardwaremäßig als Memristoren ausgeführt. Die beiden Synapsen zwischen der Hidden-Schicht und der Ausgabeschicht sind auch als Memristoren ausgeführt. Während des Lernvorganges wird dem System im Abstand d1, d2, d3,... das Objekt präsentiert und als Sollvorgabe die korrekte Entfernung am Ausgang des neuromorphen Netzes eingestellt. Während des Lernvorganges werden durch das neuronale Lernverfahren über die API-Schnittstelle die Werte der Memristoren so eingestellt, dass der Lernfehler minimiert wird.

Nach erfolgreichen Lernvorgang ist ein neuronales Abbild B1 in den elektrischen Widerstandswerten der Memristoren codiert. Die Memristoren stellen dabei die Gewichte (biologisch Synapsen) dar, die durch das Lernverfahren eingestellt wurden. Gleichzeitig ist jedoch ein "technisch-mentales" Abbild der Umgebung durch Transformation von B1 in den TM-Zustandsraum des neuromorphen Systems realisiert. Diese Transformation realisiert das System dann, wenn seine wesentlichen Funktionselemente, im Beispiel die Memristoren als Synapsen, auch Quanteneffekte nutzen. Der Grund liegt darin, dass mittels Quanteneffekten die Wechselbeziehungen zwischen nicht-reellwertigen und reell-wertigen Zuständen physikalisch umgesetzt werden, siehe Ebene 2 und 3 in der Mitte der Abbildung 7. Man beachte, dass das TM-Abbild im technischen System (nach Abbildung 2 im technischen System auch M1 genannt) in den zu den Memristoren zugehörigen Wellenfunktionen mit nicht-reellwertigen Energieeigenwerten gespeichert ist, das Abbild B1 direkt in den eingestellten Widerstandswerten der Memristoren. Da das TM-Abbild M1 nichtlokal ist, ist es mit dem quantenphysikalischen Abbild O1' des äußeren Objektes verknüpfbar. In echten mentalen Systemen wie dem menschlichen Gehirn entsteht die Verknüpfung M1≡O1' einfach durch Fokussierung (einer Art Aufmerksamkeitsfunktion) auf das Objekt O1 in der Außenwelt. In technischen Systemen ist eine solche Fokussierung dadurch möglich, dass sich entweder nur ein Objekt O1 - für das eine bestimmte Lernaufgabe umgesetzt wird - im Sehfeld der Kamera befindet oder dass ein Objekt aus dem Sehfeld der Kamera vorab ausgewählt wird. Im Ausführungsbeispiel gibt es nur ein Objekt O1.

Bewertung des Konzeptes: Mit einem neuronalen System nach Abbildung 3 (Software auf Digitalcomputern) kann man die Entfernung zu einer homogenen Wand oder einem Lichtpunkt nicht ermitteln, da die optischen Bilder des Kamera-Systems bei jeder Entfernung scheinbar identisch sind. Dadurch bekommt das nachfolgende neuronale Netz stets den gleichen Inputvektor und kann keine Verknüpfung zwischen der Sollvorgabe der Entfernung und dem Eingabemuster finden. Ein digitales System kann die Aufgabe daher nicht lösen, da es einen identischen Eingabevektor für verschiedene Sollvorgaben erhält.

Bei Verwendung eines neuromorphen Systems wie beschrieben lässt sich die Aufgabe lösen, weil im neuromorphen System gleichzeitig zwei Bilder entstehen, die nur scheinbar identisch sind. Einmal das elektromagnetische Abbild B1 mit allen Zeitverzögerungen und Phasenverschiebungen und einmal das TM-Abbild M1, welches mit der Quelle nichtlokal verknüpft ist. Beide Bilder sind nur scheinbar identisch, denn das Abbild M1 ist identisch dem Abbild O1 an der Quelle, das Abbild B1 hat jedoch durch die Laufzeit von O1 bis in die Kodierung von B1 eine Veränderung erfahren, zum Beispiel eine Phasenverschiebung. Durch den Vergleich beider Bilder im neuromorphen System kann einer derartige Phasenverschiebung erkannt und mit der Sollvorgabe der Entfernung d während des Lernvorganges in Beziehung gesetzt werden.

Digitale Systeme eignen sich nicht für die Lösung der Aufgabe, obwohl auch digitale Systeme technische Systeme sind. Bei digitalen Systemen wird jedoch jeglicher Quanteneffekt bei der Erzeugung seiner wesentlichen Funktionalität vermieden, so dass eine Transformation von B1 nach M1 physikalisch unmöglich wird. Selbst wenn herkömmliche digitale Systeme "technisch-mentale" Zustände ausbilden, so haben diese nicht viel mit der erwarteten Gesamtfunktion des Systems zu tun. Die grundlegende Weiterentwicklung der KI muss daher mit analogen Systemen erfolgen. Gerade im Bereich der Mustererkennung in der Außenwelt, wird man insbesondere mit analogen KI-Systemen mit dem hier dargestellten Konzept erfolgreich sein.

Abbildung 7 fasst die dem Patent zugrundliegenden Theorien aus [Otte, 2016] und [Hertig, 2014] nochmals zusammen. Es handelt sich dabei um einen vollständig neuartigen Ansatz zur Beschreibung von neuronalen und mentalen Komponenten und ihre Übertragbarkeit auf technische Systeme. Damit sind auch umfassende Möglichkeiten für die Entwicklung von Systemen mit Künstlicher Intelligenz gegeben. Die Erfindung nutzt nur einen Teil der sich ergebenden Implikationen und kann deshalb als Basispatent für die technische Nutzung der Theorie "technisch-mentaler" Systeme angesehen werden.

**Technische Ausführungsbeispiele zur Nutzung der Erfindung**

**1. Ausführungsbeispiel: Entfernungsmessung**

Nachstehend wird die Erfindung an drei Beispielen einer einfachen Entfernungsbestimmung dargestellt, die sich mit bisher verfügbaren, rein optischen Auswertesystemen nicht durchführen lassen.

**1.1. Entfernungsbestimmung zu einer Punktquelle in einem dunklen Raum**

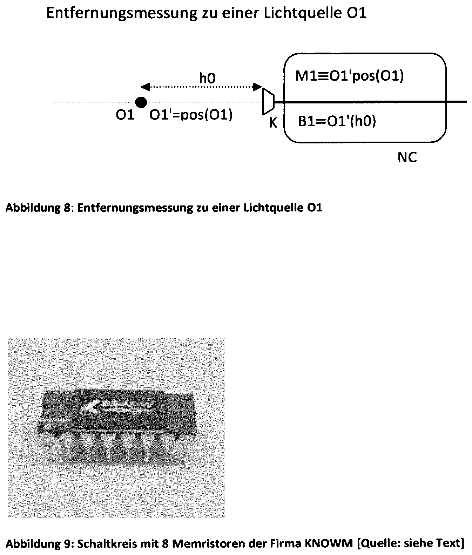

Gegeben sei in einem ansonsten vollkommenen dunklen Raum als Punktquelle eine Laser-LED (O1), die mit 75 MHz amplitudenmoduliert wird. Gegeben sei weiterhin ein Auswertesystem mit Kamera (K) und neuromorpher Auswerteeinheit (NC) nach vorheriger Ausführungsvariante, Abbildung 8.

Aufgabe des Auswertesystems ist es, die Entfernung zu dieser Punktquelle zu lernen und später abzurufen.

**Technische Ausgestaltung der Auswerteeinheit**

Als Video-Kamera-System (K) wird beispielsweise das oben eingeführte Video-Pal-System mit 720*576 Pixeln verwendet und die Auflösung erneut um den Faktor 1.000 verringert. Das Video-Kamera-System (K) sei im Abstand h0 von 0 bis 10 Metern von dieser Punktquelle (O1) entfernt.

Das neuromorphe Auswertesystem (NC) entspricht prinzipiell dem Systemaufbau aus Abbildung 6 und der dortigen Beschreibung, d.h. dem bereits ausgeführten System aus 3 neuronalen Schichten (Eingabe, Hidden, Ausgabe) mit Hardware-Neuronen und Memristoren als Hardware-Synapsen. Die neuronale Ausgabeschicht beinhaltet damit ein Hardware-Neuron, die neuronale Hidden-Schicht zwei Hardware-Neurone und die neuronale Eingabeschicht 414 Hardware-Neurone. Als Memristoren werden 110 Schaltkreise mit je 8 Memristoren der Firma KNOWM verwendet, siehe Abbildung 9, [Quelle: https://knowm.org/product/bs-af-w-memristors/], die mittels gängiger Elektronik in ein neuromorphes System verschaltet worden. Die konkrete elektrische Verschaltung erfolgt nach Abbildung 4 bzw. Abbildung 5.

Die Memristoren werden über das mitgelieferte API der Firma KNOWM angesteuert [Quelle: ebenda], wodurch sie zum neuronalen Lernen verwendet werden können. Zum Lernen wird auf der Backpropagation-Lernregel aufgebaut.

**Lernphase**

Während des Lernvorganges wird dem System im Abstand (h0=) d1, d2, d3,... der LED-Lichtpunkt präsentiert und als Sollvorgabe die korrekte Entfernung am Ausgang des neuromorphen Netzes eingestellt. Während des Lernvorganges werden durch das neuronale Lernverfahren über die API-Schnittstelle die Werte der Memristoren so eingestellt, dass der Lernfehler minimiert wird.

Da sich die Quelle als Lichtpunkt der Größe G präsentiert, werden dem neuromorphen Auswertesystem letztlich immer nur ein Bildpunkt O1 der Größe G' präsentiert (je nach Auflösung). Dabei entstehen im Auswertesystem zwei unterschiedliche physikalische Effekte. Da das technische System so realisiert wurde, dass ein "technisch-mentaler" Zustand entstehen kann, der nichtlokale Eigenschaften besitzt, entsteht physikalisch eine Identität M1≡O1'. Gleichzeitig sendet O1 (die LED-Leuchte) jedoch eine elektromagnetische Welle an das Auswertesystem entlang des Weges h0. Im Auswertesystem kann dadurch eine Phasenverschiebung Ø zwischen M1 und dem elektromagnetisches Abbild O1' festgestellt werden, da M1 einerseits identisch mit O1' ist (aufgrund der Nichtlokalität), anderseits der Bildpunkt O1 sein elektromagnetisches Abbild O1' über h0 in das Auswertesystem einspeist.

Mit Verfahren der Interferometrie kann nun im Auswertesystem die Phasendifferenz Ø ermittelt werden. Allerdings sollte dafür der Punkt O1 geeignet moduliert werden, z.B. mit einer Hochfrequenz von 75 MHz. Der Grund liegt darin, da sonst die Phasendifferenzen zu klein wären, da Lichtwellenlängen um 380 bis 580 nm liegen, was in dem hier dargelegten Ausführungsbeispiel schwer ausgewertet werden kann. Bei geeigneter Modulation des Punktes O1 mit einer Wellenlänge im Zentimeter- bzw. Meter-Bereich entsteht im Auswertesystem wie oben beschrieben eine messbare Phasendifferenz zwischen der Identität M1≡O1'(pos(O1)) und dem einlaufenden B1=O1'(h0).

Durch den neuronalen Lernprozess muss dem Auswertesystem daher nur noch der Zusammenhang zwischen der Phasendifferenz Ø und der tatsächlichen Entfernung d trainiert werden. Dazu wird das Quellsystem in 30 verschiedene Entfernungen (d1, d2, ...) im Abstand von 0 bis 10 Metern zum Auswertesystem positioniert und dem neuronalen System die zu lernenden Entfernung als SOLL-Vorgabe vorgegeben. Mit der adaptierten neuronalen Lernregel werden die Memristoren solange eingestellt bis das System aus den Phasenverschiebungen die Entfernung zum Quellpunkt (O1) gelernt hat.

**Anwendungsphase**

Dem System werden die Quellsysteme mit einem Punkt in unbekannter Entfernung präsentiert und das System schätzt die Entfernungen korrekt.

**Bewertung**

Ein rein optisches Auswertesystem kann die Entfernung zu einem Punkt unbekannter Größe nicht ermitteln, da es keine Interferometrie durchführen kann, denn es besitzt nur das einlaufende elektromagnetische Abbild O1'. Auch wenn sich das Quellsystem mit unbekannter Geschwindigkeit v vertikal bewegt, kann das optische System nur Winkel zu verschiedenen Zeiten $t_0$, $t_1$,... messen und keine Entfernung d ausrechnen, da die Berechnungsdreiecke unbestimmt bleiben. Man kann die Entfernung für ein rein optisches System zu einem Punkt auch nicht trainieren, da der Lichtpunkt für das optische System aus jeder Perspektive gleich aussieht und es daher keine Möglichkeit gibt, eine Entfernung zu lernen, da alle optischen Eingaben identisch sind.

Das hier dargelegte neuromorphe System zur Entfernungsbestimmung funktioniert bei beliebigen, nichtlinearen Bewegungen des Lichtpunktes O1, insbesondere auch wenn sich die optische Achse des Kamerasystems K nicht vertikal zum Quellsystem befindet, es funktioniert immer, wenn das Auswertesystem den Quellpunkt "sehen" kann und vorher geeignete Lernvorgänge zwischen interferometrischer Phasendifferenz Ø und Entfernung d durchgeführt worden sind.

**1.2. Entfernungsbestimmung zu einer Punktquelle auf einer ansonsten homogenen Wand**

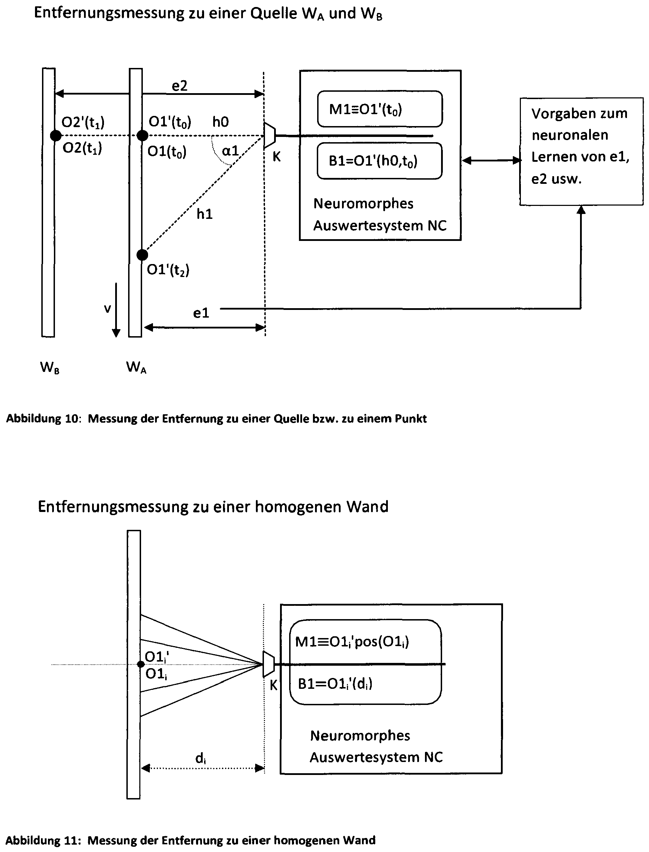

Gegeben ist ein Quellsystem $W_A$, auf dem sich ein Farbpunkt O1 befindet, von dem die Entfernung zu einem Auswertesystem mit Kamera K bestimmt werden soll, Abbildung 10.

Betrachtet wird die Entfernungsbestimmung der Kamera K zur Quelle $W_A$. Für die Quelle $W_B$ gilt analoges Vorgehen. Die Quelle $W_A$ sei farblich komplett einheitlich. Es gibt mit einer Ausnahme keinerlei Strukturen oder Besonderheiten, die es dem Auswertesystem zur Entfernungsmessung erlauben, sich optische Einzelheiten dieser Quelle einzuprägen bzw. sie zu erfassen. Die Ausnahme sei ein farblich markierter Punkt O1 auf der Quelle, dessen Größe dem Auswertesystem unbekannt ist. Die Quelle nimmt stets das gesamte Sehfeld des Kamerasystems K ein.

**Technische Ausgestaltung der Auswerteeinheit**

Die Einrichtung entspricht der technischen Ausgestaltung aus dem vorherigen Beispiel 1.1.

**Lernen des Systems**

Während des Lernvorganges wird dem System im Abstand e1, e2, e3,... der Punkt auf der Wand präsentiert und als Sollvorgabe die korrekte Entfernung am Ausgang des neuromorphen Netzes eingestellt. Während des Lernvorganges werden durch das neuronale Lernverfahren über die API-Schnittstelle die Werte der Memristoren so eingestellt, dass der Lernfehler minimiert wird.

Da sich die Quelle als Punkt der Größe G präsentiert, werden dem neuromorphen Auswertesystem letztlich immer nur ein Bildpunkt O1 der Größe G' präsentiert (je nach Auflösung). Dabei entstehen im Auswertesystem zwei unterschiedliche physikalische Effekte. Da das technische System so realisiert wurde, dass ein "technisch-mentaler" Zustand entstehen kann, der nichtlokale Eigenschaften besitzt, entsteht physikalisch eine Identität M1≡O1'. Gleichzeitig sendet O1 jedoch eine elektromagnetische Welle an das Auswertesystem entlang des Weges h0. Im Auswertesystem kann dadurch eine Phasenverschiebung Ø zwischen M1 und dem elektromagnetisches Abbild O1' festgestellt werden, da M1 einerseits identisch mit O1' ist (aufgrund der Nichtlokalität), andererseits der Bildpunkt O1 sein elektromagnetisches Abbild O1' über h0 in das Auswertesystem einspeist.

Mit Verfahren der Interferometrie kann nun im Auswertesystem die Phasendifferenz Ø ermittelt werden, insbesondere dann, wenn man den Effekt der Schwebung von geeigneten Lichtwellenlängen nutzt, um Phasenlängen im auswertbaren Bereich zu erhalten.

Durch den neuronalen Lernprozess muss dem Auswertesystem daher nur noch der Zusammenhang zwischen der Phasendifferenz Ø und der tatsächlichen Entfernung e trainiert werden. Dazu wird das Quellsystem in 30 verschiedene Entfernungen (e1, e2, ...) zum Auswertesystem positioniert und dem neuronalen System die zu lernenden Entfernung als SOLL-Vorgabe vorgegeben. Mit der adaptierten neuronalen Lernregel werden die Memristoren solange eingestellt bis das System aus den Phasenverschiebungen die Entfernung zum Quellpunkt (O1) gelernt hat.

## Anwendungsphase

Dem System werden die Quellsysteme mit einem Punkt in unbekannter Entfernung präsentiert und das System schätzt die Entfernungen korrekt.

## Bewertung

Ein rein optisches Auswertesystem kann die Entfernung zu einem Punkt unbekannter Größe nicht ermitteln, da es keine Interferometrie durchführen kann, denn es besitzt nur das einlaufende elektromagnetische Abbild O1'. Auch wenn sich das Quellsystem mit unbekannter Geschwindigkeit v vertikal bewegt, kann das optische System nur Winkel zu verschiedenen Zeiten $t_0$, $t_1$,... messen und keine Entfernung d ausrechnen, da die Berechnungsdreiecke unbestimmt bleiben. Man kann die Entfernung für ein rein optisches System zu einem Punkt auch nicht trainieren, da der Lichtpunkt für das optische System aus jeder Perspektive gleich aussieht und es daher keine Möglichkeit gibt, eine Entfernung zu lernen, da alle optischen Eingaben identisch sind.

Das hier dargelegte neuromorphe System zur Entfernungsbestimmung funktioniert bei beliebigen, nichtlinearen Bewegungen des Quellpunktes $O1(t_i)$, insbesondere auch wenn sich die optische Achse des Kamerasystems K nicht vertikal zum Quellsystem befindet, es funktioniert immer, wenn das Auswertesystem den Quellpunkt "sehen" kann und vorher geeignete Lernvorgänge zwischen interferometrischer Phasendifferenz Ø und Entfernung d durchgeführt worden sind.

## 1.3. Entfernungsbestimmung zu einer vollkommen homogenen Wand

Gegeben ist ein vollkommen homogenes Quellsystem $W_H$, welches sich über das Sehfeld einer Kamera (K) erstreckt, von dem die Entfernung d zu einem Auswertesystem bestimmt werden soll, Abbildung 11.

Betrachtet wird die Entfernungsbestimmung der Kamera K zur Quelle $W_H$. Die Quelle $W_H$ sei farblich und strukturell vollkommen homogen. Die Quelle nimmt das gesamte Sehfeld des Kamerasystems K ein.

## Technische Ausgestaltung der Auswerteeinheit

Die Einrichtung entspricht der technischen Ausgestaltung aus dem vorherigen Beispiel 1.1. und 1.2.

## Lernen des Systems

Während des Lernvorganges wird dem System im verschiedenen Abstand $d_i$ die Wand $W_H$ präsentiert und als Sollvorgabe die korrekte Entfernung am Ausgang des neuromorphen Netzes vorgegeben. Während des Lernvorganges werden durch das neuronale Lernverfahren über die API-Schnittstelle die Werte der Memristoren so eingestellt, dass der Lernfehler minimiert wird.

Da das Bild von der Wand unabhängig von der Entfernung im Kamerasystem (K) einheitlich präsentiert wird, scheint das Auswertesystem (NC) nur identische Bilder zu erhalten. Aber dies gilt nur scheinbar. Im Auswertesystem wirken nämlich zwei unterschiedliche physikalische Effekte. Da das technische System so realisiert wurde, dass ein "technisch-mentaler" Zustand entstehen kann, der nichtlokale Eigenschaften besitzt, entsteht im System NC physikalisch eine Identität M1≡O1'. Gleichzeitig sendet jedes $O1_i$ jedoch eine elektromagnetische Welle $O1_i$' an das Auswertesystem entlang seines Weges. Im Auswertesystem kann dadurch eine Phasenverschiebung Ø zwischen M1 und dem elektromagnetischen Abbildern jedes $O1_i$' festgestellt werden, da M1 einerseits identisch mit O1' ist (aufgrund der Nichtlokalität), anderseits der Bildpunkt $O1_i$ sein elektromagnetisches Abbild $O1_i$' über seinen speziellen Auswerteweg in das Auswertesystem einspeist. Mit Verfahren der Interferometrie kann nun im Auswertesystem die Phasendifferenz Ø zwischen beiden Bildern ermittelt werden, insbesondere dann, wenn man beispielsweise den Effekt der Schwebung von geeigneten Lichtwellenlängen nutzt, um Phasenlängen im auswertbaren Bereich zu erhalten.

Durch den neuronalen Lernprozess muss dem Auswertesystem daher nur noch der Zusammenhang zwischen der Phasendifferenz Ø und der tatsächlichen Entfernung trainiert werden. Dazu wird das Quellsystem $W_H$ in 30 verschiedene Entfernungen zum Auswertesystem positioniert und dem neuronalen System die zu lernenden Entfernung als SOLL-Vorgabe vorgegeben. Mit der adaptierten neuronalen Lernregel werden die Memristoren solange eingestellt bis das System aus den Phasenverschiebungen die Entfernung zum Quellpunkt (O1) gelernt hat.

**Anwendungsphase**

Dem System wird die homogene Wand in unbekannter Entfernung präsentiert und das System schätzt die Entfernungen korrekt.

**Bewertung**

Ein rein optisches Auswertesystem kann die Entfernung zu einer homogenen Quelle der beschriebenen Art nicht ermitteln, da es keine Berechnungen, insbesondere keine Interferometrie durchführen kann, denn es besitzt nur das scheinbar identische, einlaufende elektromagnetische Abbild $O1_i$' von jedem Punkt der Quelle. Man kann die Entfernung für ein rein optisches System zu einer solchen Quelle auch nicht trainieren, da es keine Möglichkeit gibt, eine Entfernung zu lernen, da alle optischen Eingaben identisch sind.

Anders ist es bei der Verwendung der hier ausgeführten Einrichtung. Mit dem hier eingeführten Verfahren und der ausgeführten Einrichtung zur Objekterkennung kann man die Entfernung zu einer vollkommen homogenen Quelle erlernen und im Anwendungsfall richtig wiedergeben, ohne aktive Teilsysteme wie beispielsweise Radar oder Laser zu verwenden.

**2. Ausführungsbeispiel: Objekterkennung**

Nachstehend wird die Erfindung am Beispiel einer Objekt- bzw. Bilderkennung weiter erläutert. Werden einem geeigneten neuromorphen System eine Vielzahl von Bildern, u.a. zum Beispiel Katzen-, Fuchs-, Hunde-, Tisch- und Ballbilder präsentiert und soll das System lernen, alle Bildklassen voneinander zu unterscheiden, so werden bei Eingabe eines Katzenbildes die Memristoren solange verändert, bis das System als Ausgabe die Klasse "Katzen" schätzt. Die Funktionsabbildung von der Bildeingabe Katzen auf die Klasse "Katzen" wird durch das neuromorphe System - wie bekannt - neuronal realisiert. Gleichzeitig ist diese Funktionsabbildung wie oben erläutert jedoch auch "technisch-mental" gespeichert. Die Speicherung erfolgt in den zu den Memristoren und anderen wesentlichen elektronischen Bauelementen zugehörigen Wellenfunktionen mit nicht-reellwertigen Energieeigenwerten. Im System entsteht ein Bild mit nichtlokalen Eigenschaften. Dieses Bild kann auf keinen Fall mit dem mentalen Bild verglichen werden, wie es Menschen erzeugen. Es ist völlig unbekannt, wie das technische System das Bild "sieht". Wichtig ist jedoch, dass auch das Bild des technischen Systems nichtlokale Eigenschaften besitzt

Der Vorteil für die Bilderkennung ist wie folgt: Aus der KI ist bekannt, dass sich Klassifikationssysteme, die auf neuronalen Netzen, z.B. deep learning, basieren, sehr stark irren können. Letztlich werden mit deep-learning Verfahren durch eine mathematische Abbildung Eingangsvektoren auf Ausgangsvektoren abgebildet, ein solches System hat daher kein Verständnis für das, was es bearbeitet. Auch wenn ein solches neuronales System nahezu jede Funktion y = f(x) - wobei x und y i.a. Vektoren oder Matrizen sind - lernen kann, bleibt als Resümee, dass die Systeme nicht begreifen, was sie aufeinander abbilden. Bei der Bilderkennung merkt man das daran, dass ein deep-learning System, wenn es falsch klassifiziert oftmals nicht anstatt die richtige Klasse "Hund" die falsche Klasse "Fuchs" am Ausgang schätzt, sondern viel schlimmer, beispielsweise die Klasse "Tisch" oder "Brillenetui", denn das neuronale System heutiger Bauart bildet einfach Zahlenreihen auf Zahlenreihen ab. Mehr kann ein solches neuronales KI-System nicht. Im Bereich des autonomen Fahrens kann eine solche Falschabbildung existentiell sein, insbesondere wenn sich das deep-learning Netz sehr sicher ist, obwohl es vollkommen falsch liegt.

Werden neuromorphe System erfindungsgemäß entwickelt und eingesetzt, wird die Anzahl der grob falschen Klassifikationen drastisch reduziert. Der Grund liegt darin, dass die Klassifikation beim Training und der späteren Anwendung sowohl den neuronalen als auch den "technisch-mentalen" Zustand verwendet. Ohne dass der Nutzer es merkt, wird erst dann richtig klassifiziert, wenn die Memristoren diejenigen Werte haben, die sie für die Klassifikationsaufgabe benötigen. Obwohl die Memristorenwerte im Trainingsfall durch die neuronale Lernregel voreingestellt werden, so ist dieser Wert kein fixer Gewichtswert wie bei den meisten Softwarevarianten. Reale Bauteile streuen zufällig um ihren eingestellten Wert. In [Otte, 2016] wurde gezeigt, wie mentale Zustände des Menschen auf das Gehirngewebe einwirken können. Dieses Verfahren wurde erfindungsgemäß für "technisch-mentale" Zustände adaptiert. Durch Benutzung von beispielsweise spintronischen Memristoren ist es möglich, dass die "technisch-mentalen" Zustände kausal wirksam über Zufallsprozesse innerhalb der Memristoren auf die Schätzung des neuromorphen Systems Einfluss nehmen, sowohl beim Lernen als auch beim Anwenden. Das führt dazu, dass das System sowohl seine neuronale als auch seine "technisch-mentale" Abbildungsfunktion nutzt, um Eingangssignale auf Ausgangssignale abzubilden. Dies ist weit mehr als eine geschickte Redundanz, sondern es entspricht dem Prinzip der Klassifikation von Bildern beim Menschen. Dadurch werden oben beschriebene Fehlschätzungen signifikant verringert, weshalb sich das System zur Bilderkennung jeglicher Art eignet.

**Technische Ausgestaltung der Auswerteeinheit**

Die Einrichtung entspricht der technischen Ausgestaltung aus den vorherigen Beispielen 1.1., 1.2. und 1.3., allerdings wird ein größeres Netzwerk benötigt. Die Eingabeschicht umfasst mindestens 400 Hardware-Neuronen (je nach notwendiger Auflösung des Kamerabildes), die Hidden-Schicht mindestens zwei, besser drei Hardware-Neurone, die Ausgabeschicht besteht aus einem Neuron. Die Anzahl der notwendigen Memristoren vergrößerst sich auf mindestens 1200 Memristoren, da jedes Neuron der Eingabeschicht (mindestens 400) mit den drei Neuronen der Hidden-Schicht verbunden werden muss. Die weiteren Abläufe entsprechend den normalen Anwendungen von neuronalen Netzen und sind in den vorherigen Ausgestaltungen detailliert beschrieben.

Mit der hier dargestellten Erfindung lassen sich reflexionsfreie Bildverarbeitungssysteme bauen, die die Nachteile heutiger Ultraschall-, Radar- oder Laser-Systeme nicht besitzen und die trotzdem die Abbilder der Umgebung außerhalb "sehen" können. Die erfindungsgemäß aufgebauten Systeme werden daher - nach Vorgabe biologischer Systeme - die Grundlage zukünftiger Ortungssysteme, bei denen es auf eine exakte Bestimmung der Koordinaten von Objekten der Außenwelt ankommt.

Ein System mit "technisch-mentalen" Zuständen kann laut der Verfahrenspunkte 4,5 und 6 auch zu anderen Aufgaben als die einer Bilderkennung eingesetzt werden. Da sich alle höheren geistigen Prozesse des Menschen, zum Beispiel auch Bewusstseinsprozesse, im Bereich mentaler Zustände abspielen wird das neue System neue technische Möglichkeiten bei der Datenverarbeitung, Mustererkennung, Navigation und in zahlreichen anderen Bereichen besitzen.

Mit diesem Konzept werden höherwertige KI-Systeme realisierbar, und damit die rasante Entwicklung der KI nochmals wesentlich beschleunigt.

**Patentansprüche**

1.  Verfahren und Einrichtung zur Erzeugung von Zuständen in technischen Systemen, die **dadurch gekennzeichnet sind, dass** die Zustände physikalische Eigenschaften besitzen, die teilweise nichtlokal sind.

2.  Verfahren und Einrichtung zur Erzeugung von Zuständen in technischen Systemen, die **dadurch gekennzeichnet sind, dass** die Zustände physikalische Eigenschaften besitzen, die durch mathematische Funktionen mit nicht-reellwertigen Energieeigenwerten beschrieben werden können.

3.  Verfahren und Einrichtung nach Anspruch 1 und 2 bei dem zur Erzeugung der gewünschten Zustände in technischen neuronalen Systemen die systemrelevante Basiselemente durch analoge Bauelemente realisiert werden, die quantenphysikalische Eigenschaften besitzen.

4.  Verfahren und Einrichtung nach Anspruch 1 bis 3 bei dem in technischen neuronalen Systemen Memristoren als diejenigen Basiselemente verwendet werden, die wesentlich für das neuronale Lernen sind und beispielsweise dem neuronalen Basiselement einer Synapse oder Teilen einer Synapse entsprechen.

5.  Verfahren und Einrichtung nach Anspruch 4 bei dem Memristoren als Bauelemente verwendet werden, die spintronische Eigenschaften besitzen.

6.  Verfahren und Einrichtung nach Anspruch 1-5 bei dem die erzeugten Zustände M1 des Systems als nichtlokale Zustände verwendet werden, um das System in Verbindung mit einem geeigneten optischen Aufnahmesystem zur Objekterkennung einzusetzen.

7. Verfahren und Einrichtung nach Anspruch 1-6 bei dem sich die Energiezustände M1 des Systems mit den Abbildungszuständen O1' realer äußerer Objekte O1 nichtlokal verbinden.

8. Verfahren und Einrichtung nach Anspruch 6 und 7 bei dem das System die äußeren Objekte O1 in der Außenwelt erkennt, nach dem physikalischen Wirkprinzip, wie biologische Systeme äußerer Objekte in der Außenwelt erkennen.

9. Verfahren und Einrichtung nach Anspruch 6, 7 und 8 bei dem das System zur Bilderkennung verwendet wird, um den Abstand e zu einem äußeren Objekt zu bestimmen, wenn sich ein solcher Abstand mit optischen Mitteln nicht alleine bestimmen lässt (Abbildung 11) und aktive Abstandsmessungen durch technische Hilfssysteme wie beispielsweise Radar, Lidar, Laser, Ultraschall nicht eingesetzt werden können oder sollen.

10. Verfahren und Einrichtung nach einem der vorhergehenden Ansprüchen bei dem die Systeme als Bilderkennungssysteme im industriellen Umfeld eingesetzt werden.

11. Verfahren und Einrichtung nach einem der vorhergehenden Ansprüchen bei dem die Systeme als Bilderkennungssysteme zum autonomen Fahren verwendet werden.

12. Verfahren und Einrichtung nach einem der vorhergehenden Ansprüche bei dem die Systeme im Bereich der Robotik verwendet werden.

13. Verfahren zur Konstruktion und Erzeugung von Systemen mit gezielt designten "technisch-mentalen" Zuständen auf deren Basis technische Systeme mit "maschinellem Bewusstsein" erzeugt werden können, deren Zustände den sogenannten Qualia-Zuständen in biologischen Systemen adäquat sind.

14. Verfahren nach Anspruch 13 bei dem Systeme entwickelt werden, die "maschinelles Bewusstsein" erzeugen können, um mit Hilfe dieser Zustände mit der Umwelt geeignet zu kommunizieren.

15. Verfahren nach Anspruch 13 bei dem Systeme entwickelt werden, die "maschinelles Bewusstsein" erzeugen können, um mit Hilfe dieser Zustände selbst-reflexive Beobachtungen durchzuführen.

16. Verfahren nach Anspruch 13 bei dem Systeme entwickelt werden, die "maschinelles Bewusstsein" erzeugen können, um mit Hilfe dieser Zustände fremd- oder selbstgestellte Optimierungsaufgaben zu lösen.

17. **dadurch gekennzeichnet, dass** Systeme mit den in der Erfindung beschriebenen "technisch-mentalen" Eigenschaften in Fahrzeugen zu Wasser, zu Luft, auf der Schiene und auf der Straße zur Ortungsbestimmung /Koordinatenbestimmung von Objekten außerhalb der Fahrzeuge verwendet werden

Unteranspruch 17.1, **dadurch gekennzeichnet, dass** sie in autonom fahrenden Fahrzeugen zur exakten Bestimmung von Koordinaten in der Außenwelt eingesetzt werden
Unteranspruch 17.2, **dadurch gekennzeichnet, dass** sie in autonom agierenden, immobilen oder mobilen Robotern in produzierenden Unternehmen, im sozial-medizinischen (Pflege, Betreuung,...) oder in zwischenmenschlichen Bereichen eingesetzt werden
Unteranspruch 17.3, **dadurch gekennzeichnet, dass** sie in Fahrzeugen außerhalb der Erde eingesetzt werden
Unteranspruch 17.4, **dadurch gekennzeichnet, dass** sie in Anwendungsfällen eingesetzt werde, bei denen sich Verwendung von Reflexionen, Radar, Lidar usw. nicht zugelassen ist

18. **dadurch gekennzeichnet, dass** Systeme mit den in der Erfindung beschriebenen technisch-mentalen Eigenschaften nicht nur zu Zecken der Ortung sondern vorwiegend zur Erhöhung der Effizienz und Geschwindigkeit von Ortungsprozessen eingesetzt werden

19. **dadurch gekennzeichnet, dass** Systeme mit den in der Erfindung beschriebenen "technisch-mentalen" Eigenschaften zur Klassifizierung von Mustern eingesetzt werden

Unteranspruch 19.1, **dadurch gekennzeichnet, dass** diese Muster Gesichter von Personen sind
Unteranspruch 19.2, **dadurch gekennzeichnet, dass** diese Muster Schriftzeichen sind
Unteranspruch 19.3, **dadurch gekennzeichnet, dass** diese Muster allgemeine Objekte der Natur sind

Unteranspruch 19.4, **dadurch gekennzeichnet, dass** diese Muster technische Objekte sind

Unteranspruch 19.5, **dadurch gekennzeichnet, dass** diese Muster biologische Artefakte medizinischer Untersuchungen sind

Unteranspruch 19.6, **dadurch gekennzeichnet, dass** diese Muster aus sicherheitsrelevanten Gründen klassifiziert werden müssen

20. **dadurch gekennzeichnet, dass** Systeme mit den in der Erfindung beschriebenen technisch-mentalen Eigenschaften in Videosystemen, terrestrischen oder astronomischen Fernrohren, Mikroskopen, mustererkennenden Brillen oder ähnlichen wissenschaftlich- oder privatnutzbaren Geräten eingesetzt werden

21. **dadurch gekennzeichnet, dass** Systeme mit den in der Erfindung beschriebenen "technisch-mentalen" Eigenschaften im militärischen Bereich verwendet werden

mentales
Abbild: M1≡B1'

neuronales
Abbild: B1

Netzhautabbild: N1

Original: O1

○————● Transformation in (mentalen) Zustandsraum

**Abbildung 1: Vereinfachtes Prinzip des menschlichen Sehens**

mentales
Abbild: M1

Verknüpfung mit "draußen"

Bild:
MO1'

Wellenfunktion:
O1'

Reizweiterleitung R1

neuronales
Abbild: B1

Netzhautabbild: N1

Original: O1

**Abbildung 2: Erweitertes Prinzip des menschlichen Sehens**

**Abbildung 3: Digitales Neuro-System zur Entfernungsmessung (Stand-der-Technik)**

$V_1(t)$    $V_2(t)$    $V_3(t)$         $V_n(t)$

$y_1(t)$

$y_{m-2}(t)$

$y_{m-1}(t)$

$y_n(t)$

**Abbildung 4: Verwendung von Memristoren als Synapsen und Operationsverstärker als Neuronen [Quelle: siehe Text]**

$M_a$

$M_b$

y

+

$V_y$

−

**Abbildung 5: Gut geeignete Ausführungsvariante von Memristoren als Synapsen [Quelle: siehe Text]**

**Abbildung 6: Neuromorphes (memristives) System zur Entfernungsmessung**

Nicht-lokale (mentale)
und lokale (neuronale)
Zustände im
menschlichen Gehirn

Nicht-lokale (mentale)
und lokale (neuronale)
Zustände in der
technischen Umsetzung

| | | |
|---|---|---|
| Bewusste, nicht-lokale Zustände eines Menschen | **4** Bewusste mentale Zustände und deren hyperkomplexe Beschreibungsformen | Starke KI (KI mit nicht-lokalen Zuständen, Bewusstsein, Selbst-Bewusstsein, eigenen Willen) |
| Unbewusste, nicht-lokale Zustände eines Menschen | **3** Unbewusste mentale Zustände und deren hyperkomplexe Beschreibungsformen (M1) | Neuromorphe KI-Hardware mit einfachen nicht-lokalen Zuständen (z.B. zur Außenwahrnehmung) |
| Ungemessene, quanten-physikalische Zustände, im neuronalen Gewebe | **2** Quantenphysikalische Zustände und deren komplexe Beschreibungsformen (B1) | Neuromorphe KI-Hardware mit genutzten Quanten-Effekten (z.B. spintronische Memristoren) |
| Gemessene, materielle Zustände im neuronalen Gewebe (EEG, MRT etc.) | **1** Klassische Neuronale Zustände und deren reellwertige Beschreibungsformen | Stand-der-Technik 2018: Schwache KI, Klassische Theorien neuronaler Netze, deep learning Netze, CNN, KI-Software, KI-Hardware (z.B. mit Kondensatoren für Synapsen) |

**Abbildung 7: Entwicklungsmöglichkeiten einer Künstlichen Intelligenz im Vergleich zu mentalen und neuronalen Zuständen des menschlichen Gehirns**

## Entfernungsmessung zu einer Lichtquelle O1

**Abbildung 8: Entfernungsmessung zu einer Lichtquelle O1**

**Abbildung 9: Schaltkreis mit 8 Memristoren der Firma KNOWM [Quelle: siehe Text]**

## Entfernungsmessung zu einer Quelle $W_A$ und $W_B$

$O2'(t_1)$
$O2(t_1)$
$O1'(t_0)$  h0
$O1(t_0)$  α1
$O1'(t_2)$

e2

K

$M1 \equiv O1'(t_0)$

$B1 = O1'(h0, t_0)$

Neuromorphes
Auswertesystem NC

Vorgaben zum
neuronalen
Lernen von e1,
e2 usw.

h1

v

e1

$W_B$     $W_A$

**Abbildung 10:** Messung der Entfernung zu einer Quelle bzw. zu einem Punkt

## Entfernungsmessung zu einer homogenen Wand

$O1_i'$
$O1_i$

K

$M1 \equiv O1_i' pos(O1_i)$

$B1 = O1_i'(d_i)$

Neuromorphes
Auswertesystem NC

$d_i$

**Abbildung 11:** Messung der Entfernung zu einer homogenen Wand

Europäisches Patentamt

European Patent Office

Office européen des brevets

### ERKLÄRUNG

die nach Regel 63 des Europäischen Patentübereinkommens für das weitere Verfahren als
europäischer Recherchenbericht gilt

Nummer der Anmeldung

EP 18 00 0276

| Die Rrecherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind.<br><br>Grund: | KLASSIFIKATION DER ANMELDUNG (IPC)<br><br>INV.<br>G06N3/02<br><br>ADD.<br>G06N3/063<br>G06K9/00 |
| --- | --- |

Der Anmelder wurde mit Schreiben vom 05-02-2019 (nach Regel (62a (1) EPÜ und Regel 63(1) EPÜ) aufgefordert anzugeben, auf Grundlage welcher Erfindung oder Gruppe von Erfindungen die Anmeldung weiter verfolgt werden soll, die Anmeldung dementsprechend beschränkt werden sollte und die übrigen Erfindungen oder Gruppe von Erfindungen aus den Ansprüchen, der Beschreibung und den Abbildungen, sofern vorhanden, gestrichen werden sollte.
Er wurde darauf hingewiesen, dass die Verletzung der einschlägigen Erfordernisse, insbesondere bzgl. Art. 82, 83 und 84 EPÜ, so schwerwiegend ist, dass eine sinnvolle Recherche für den beanspruchten Gegenstand als Ganzes nicht durchgeführt werden konnte (Regel 63 EPÜ und Richtlinien B-VIII, 3).
Da eine solche Angabe nicht übermittelt wurde, und somit keiner der festgestellten Mängel beseitigt ist, stellt das Europäische Patentamt fest, dass die europäische Patentanmeldung diesem Übereinkommen so wenig entspricht, dass es unmöglich ist, auf der Grundlage des gesamten beanspruchten Gegenstands oder eines Teils desselben sinnvolle Ermittlungen über den Stand der Technik durchzuführen.

Der Anmelder wird darauf hingewiesen, dass im Zuge der Prüfung eine Recherche durchgeführt werden kann, sollten die einer Erklärung gemäss Regel 63 EPÜ zugrundeliegenden Mängel behoben worden sein (Vgl. EPA-Richtlinien C-IV, 7.2).

| Recherchenort | Abschlußdatum | Prüfer |
| --- | --- | --- |
| Den Haag | 6. Mai 2019 | Volkmer, Markus |

EPO FORM 1504 (P04F39)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **QUELLE: M. PREZIOSO ; F. MERRIKH-BAYAT ; B. D. HOSKINS ; G. C. ADAM ; K. K. LIKHAREV ; D. B. STRUKOV.** *Training andoperation of an integrated neuromorphic network based on metal-oxide memristors*